(19) Europäisches Patentamt
European Patent Office
Office européen des brevets

(11) **EP 4 600 217 A1**

(12) **EUROPEAN PATENT APPLICATION**
published in accordance with Art. 153(4) EPC

(43) Date of publication:
**13.08.2025 Bulletin 2025/33**

(21) Application number: 23874819.8

(22) Date of filing: 02.10.2023

(51) International Patent Classification (IPC):
*C01G 33/00* (2006.01)    *C01G 35/00* (2006.01)
*C01B 32/914* (2017.01)

(52) Cooperative Patent Classification (CPC):
**C01B 32/914; C01G 33/00; C01G 35/00**

(86) International application number:
**PCT/JP2023/035915**

(87) International publication number:
**WO 2024/075692 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.10.2022 JP 2022159562**

(71) Applicant: Mitsui Mining & Smelting Co., Ltd
Shinagawa-ku
Tokyo 141-8584 (JP)

(72) Inventors:
• MATSUO, Ken
  Omuta-shi, Fukuoka 836-0003 (JP)
• NIKATA, Soichiro
  Omuta-shi, Fukuoka 836-0003 (JP)
• MOTONO, Ryuji
  Omuta-shi, Fukuoka 836-0003 (JP)
• HARA, Shuhei
  Omuta-shi, Fukuoka 836-0003 (JP)

(74) Representative: Novagraaf Technologies
Bâtiment O2
2, rue Sarah Bernhardt
CS90017
92665 Asnières-sur-Seine Cedex (FR)

(54) **METHOD FOR PRODUCING METAL CARBIDE, METAL CARBIDE POWDER AND METAL CARBIDE INTERMEDIATE DISPERSED LIQUID**

(57) A method for producing a metal carbide of the present invention is a method for producing a metal carbide in a powder form using a complex polymerization method, the method including a complexation step of mixing a metal hydroxide and an alkaline compound to form a first mixed liquid, adding hydrogen peroxide to the first mixed liquid to form a second mixed liquid, and further adding an organic acid to the second mixed liquid to form a metal carbide precursor, a carbonization step of firing the metal carbide precursor to form a metal carbide, and a powdering step of crushing the metal carbide to form a metal carbide powder. The metal carbide powder of the present invention has a specific surface area as measured by a BET method of 1 m$^2$/g or more and a circularity of 0.78 or more. Further, a metal carbide intermediate dispersion liquid of the present invention contains a metal compound, an alkaline compound, hydrogen peroxide, and an organic acid, and a particle diameter (D50) of particles in the metal carbide intermediate dispersion liquid as determined by particle diameter distribution measurement using a dynamic light scattering method is 1,000 nm or less.

FIG. 1

## Description

### Technical Field

The present invention relates to a method for producing a metal carbide, a metal carbide powder, and a metal carbide intermediate dispersion liquid.

### Background Art

A metal carbide such as tantalum carbide or niobium carbide is widely used as an additive to tungsten carbide or the like which is a raw material of a cemented carbide cutting tool such as a tool bit, a tip, a cutter, a drill, or a die, and is required to have good mixing performance with tungsten carbide in producing a high-quality cemented carbide cutting tool. As tantalum carbide used as an additive, Patent Literature 1 discloses a tantalum carbide powder which is less likely to cause aggregation of the powder, is fine and uniform in grain size, and has a small content of oxygen stoichiometrically sufficiently bonded to carbon.

In addition, when a metal carbide is formed into a film on the surface of a base material made of carbon or a ceramic, the metal carbide functions as a protective film that prevents thermal decomposition of the base material, for example, protects oxidation of a carbon material during heating.

### Citation List

Patent Literature

Patent Literature 1: JP 2008-31016 A

### Summary of Invention

Technical Problem

However, it has been considered that when the particles are ultrafine particles, fluidity deteriorates due to aggregation or the like, and mixability also deteriorates. In addition, in the method for producing a metal carbide in which a mixture of a metal oxide and carbon black is subjected to a heat treatment (firing method) and granulated as disclosed in Patent Literature 1, the circularity of a produced tantalum carbide powder and a tantalum carbide-niobium composite powder is lowered. Further, the circularity is further lowered by performing a pulverization step after granulation. As described above, since the metal carbide in which the particles are ultrafine particles and the circularity is low has poor fluidity, the mixability with the raw material of a cemented carbide cutting tool such as tungsten carbide deteriorates, the material does not become a homogeneous cemented carbide material, and the performance of the cemented carbide tool produced from such a raw material is poor.

In addition, also in the case of forming a film on the surface of a base material, if the circularity is high and the fluidity is high, it is easy to form a uniform film on the surface of the base material.

In view of the above problems, the present invention provides a method for producing a metal carbide having high circularity and high fluidity, a metal carbide powder, and a metal carbide intermediate dispersion liquid.

Solution to Problem

A method for producing a metal carbide of the present invention made to solve the above problems is a method for producing a metal carbide in a powder form using a complex polymerization method, the method including a complexation step of mixing a metal hydroxide and an alkaline compound to form a first mixed liquid, adding hydrogen peroxide to the first mixed liquid to form a second mixed liquid, and further adding an organic acid to the second mixed liquid to form a metal carbide precursor,

a carbonization step of firing the metal carbide precursor to form a metal carbide, and a powdering step of crushing the metal carbide to form a metal carbide powder.

For convenience of description, the method for producing a metal carbide of the present invention including a powdering step of crushing a metal carbide to form a metal carbide powder will be described below as a method for producing a metal carbide powder of the present invention.

In the complexation step in the method for producing a metal carbide powder of the present invention, first, a metal hydroxide described below and an alkaline compound are mixed to form a first mixed liquid.

The metal hydroxide is preferably a hydroxide of tantalum, niobium, titanium, tungsten, molybdenum, zirconium, or the like. In particular, the metal hydroxide is preferably tantalum hydroxide or niobium hydroxide.

For example, tantalum hydroxide is preferably adjusted by adding water (for example, pure water) so that tantalum is contained in an amount of 1 to 100 g/L in terms of $Ta_2O_5$. At this time, it is preferable that the tantalum concentration is 1 g/L or more in terms of $Ta_2O_5$ because a tantalate compound hydrate that is easy to dissolve in water is formed, and in consideration of the productivity, the tantalum concentration is more preferably 10 g/L or more, and still more preferably 20 g/L or more. On the other hand, it is preferable that the tantalum concentration is 100 g/L or less in terms of $Ta_2O_5$ because a tantalate compound hydrate that is easy to dissolve in water is formed, and in order to synthesize a tantalate compound hydrate that is easy to dissolve in water more reliably, the tantalum concentration is more preferably 90 g/L or less, still more preferably 80 g/L or less, and particularly preferably 70 g/L or less. In addition, it is also preferable to adjust niobium hydroxide so that niobium is contained in an amount of 1 to 100 g/L in terms of $Nb_2O_5$ in the same manner.

The alkaline compound is preferably one or more types of compounds selected from ammonia, sodium hydroxide, potassium hydroxide, lithium hydroxide, calcium hydroxide, and an organic nitrogen compound. Examples of the organic nitrogen compound include an amine compound, a quaternary ammonium compound, a guanidine compound, and an azole compound, and the organic nitrogen compound is preferably an amine compound or a quaternary ammonium compound, and more preferably methylamine, dimethylamine, tetramethylammonium hydroxide (TMAH), or tetraethylammonium hydroxide (TEAH). The alkaline compound may be an alkaline solution in which the alkaline compound is dissolved. The alkaline solution is particularly preferably an alkaline aqueous solution, particularly preferably ammonia water.

The alkaline compound content in the first mixed liquid is preferably more than 0 mass% and less than 50 mass%, and more preferably 0.01 mass% or more and 4 mass% or less. From the viewpoint of reactivity and dispersibility, it is desirable that the content of the alkaline compound is larger. On the other hand, since it is a volatile component, a low content is desirable from the viewpoint of preventing volatilization at the time of forming a film in a subsequent step. Typically, the alkaline compound content may be 0.1 mass% or more, 0.5 mass% or more, 1 mass% or more, 2 mass% or more, 3 mass% or more, 5 mass% or more, 8 mass% or more, or 10 mass% or more. On the other hand, the alkaline compound content may be 30 mass% or less, 25 mass% or less, 20 mass% or less, or 10 mass% or less.

The alkaline compound content in the first mixed liquid can be expressed by a molar ratio of the alkaline compound/the metal hydroxide. The molar ratio of the alkaline compound/the metal hydroxide is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of the alkaline compound/the metal hydroxide may be 0.005 or more, 0.05 or more, or 0.5 or more. On the other hand, the molar ratio of the alkaline compound/the metal hydroxide may be 15 or less, 10 or less, 8 or less, 5 or less, 4 or less, 3 or less, 2 or less, 1 or less, 0.5 or less, or 0.1 or less.

Here, the alkaline compound in the molar ratio of the alkaline compound/the metal hydroxide indicates the content of the alkaline compound in the first mixed liquid. When two or more types of alkaline compounds are contained, the content of the alkaline compound is the total content of these two or more types of alkaline compounds. On the other hand, the metal hydroxide in the molar ratio of the alkaline compound/the metal hydroxide indicates the content in terms of metal atom of the metal hydroxide in the first mixed liquid. When two or more types of metal hydroxides are contained, the content in terms of metal atom of the metal hydroxide is the total content in terms of metal atoms of these two or more types of metal hydroxides.

For example, when the metal hydroxide to be mixed is tantalum hydroxide, the molar ratio of the alkaline compound/Ta is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of the alkaline compound/Ta may be 0.005 or more, 0.05 or more, or 0.5 or more. On the other hand, the molar ratio of the alkaline compound/Ta may be 15 or less, 10 or less, 8 or less, 5 or less, 4 or less, 3 or less, 2 or less, 1 or less, 0.5 or less, or 0.1 or less.

When the metal hydroxide to be mixed is niobium hydroxide, the molar ratio of the alkaline compound/Nb is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of the alkaline compound/Ta may be 0.005 or more, 0.05 or more, or 0.5 or more. On the other hand, the molar ratio of the alkaline compound/Nb may be 15 or less, 10 or less, 8 or less, 5 or less, 4 or less, 3 or less, 2 or less, 1 or less, 0.5 or less, or 0.1 or less.

Further, when the metal hydroxide to be mixed is niobium hydroxide and tantalum hydroxide, the molar ratio of the alkaline compound to niobium and tantalum: the alkaline compound/(Nb + Ta) is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of the alkaline compound/(Nb + Ta) may be 0.005 or more, 0.05 or more, or 0.5 or more. On the other hand, the molar ratio of the alkaline compound/(Nb + Ta) may be 15 or less, 10 or less, 8 or less, 5 or less, 4 or less, 3 or less, 2 or less, 1 or less, 0.5 or less, or 0.1 or less.

When the alkaline compound is ammonia, the ammonia content in the first mixed liquid is preferably more than 0 mass% and less than 50 mass%, and more preferably 0.01 mass% or more and 4 mass% or less. From the viewpoint of reactivity and dispersibility, it is desirable that the content of ammonia is larger. On the other hand, since it is a volatile component, a low content is desirable from the viewpoint of preventing volatilization at the time of forming a film in a subsequent step. Typically, the ammonia content may be 0.1 mass% or more, 0.5 mass% or more, 1 mass% or more, 2 mass% or more, 3 mass% or more, 5 mass% or more, 8 mass% or more, or 10 mass% or more. On the other hand, the ammonia content may be 30 mass% or less, 25 mass% or less, 20 mass% or less, or 10 mass% or less.

The content of ammonia in the first mixed liquid can be expressed by a molar ratio of $NH_3$/the metal hydroxide. The molar ratio of $NH_3$/the metal hydroxide is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of $NH_3$/the metal hydroxide may be 0.005 or more, 0.05 or more, or 0.5 or more. On the other hand, the molar ratio of $NH_3$/the metal hydroxide may be 15 or less, 10 or less, 8 or less, 5 or less, 4 or less, 3 or less, 2 or less, 1 or less, 0.5 or less, or 0.1 or less.

As for the content of ammonia, when the metal hydroxide to be mixed is tantalum hydroxide, the molar ratio of $NH_3$/Ta is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of $NH_3$/Ta may be 0.005 or more, 0.05 or more, or 0.5 or more. On the other hand, the molar ratio of $NH_3$/Ta may be 15 or less, 10 or less, 8 or less, 5 or less, 4 or less, 3 or less, 2 or less, 1 or less, 0.5 or less, or 0.1 or less.

When the metal hydroxide to be mixed is niobium hydroxide, the molar ratio of $NH_3$/Nb is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of $NH_3$/Ta may be 0.005 or more, 0.05 or more, or 0.5 or more. On the other hand, the molar ratio of $NH_3$/Nb may be 15 or less, 10 or less, 8 or less, 5 or less, 4 or less, 3 or less, 2 or less, 1 or less, 0.5 or less, or 0.1 or less.

Further, when the metal hydroxide to be mixed is niobium hydroxide and tantalum hydroxide, the molar ratio of ammonia to niobium and tantalum: $NH_3$/(Nb + Ta) is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of $NH_3$/(Nb + Ta) may be 0.005 or more, 0.05 or more, or 0.5 or more. On the other hand, the molar ratio of $NH_3$/(Nb + Ta) may be 15 or less, 10 or less, 8 or less, 5 or less, 4 or less, 3 or less, 2 or less, 1 or less, 0.5 or less, or 0.1 or less.

Examples of a solvent used in the complexation step in the method for producing a metal carbide powder of the present invention include water, an organic solvent, and a mixed solvent thereof. Examples of the organic solvent include an alcohol solvent, a ketone solvent, an ether solvent, an ester solvent, an aromatic hydrocarbon solvent, and an aliphatic hydrocarbon solvent, and a solvent obtained by mixing such an organic solvent with pure water may be used. Examples of the alcohol solvent include alcohols having 5 or less carbon atoms (methanol, ethanol, n-propanol, isopropyl alcohol, butanol, ethylene glycol, and propylene glycol), acetone, and a high boiling point solvent. The solvent and water are preferably compatible with each other.

Examples of the high boiling point solvent include a polyhydric alcohol-based solvent and a glycol-based solvent. Examples of the polyhydric alcohol-based solvent include glycerin (boiling point: 290°C), 1,6-hexanediol (boiling point: 250°C), and 1,7-heptanediol (boiling point: 259°C). Examples of the glycol-based solvent include ethylene glycol (boiling point: 197.3°C), propylene glycol (boiling point: 188.2°C), diethylene glycol (boiling point: 244.3°C), triethylene glycol (boiling point: 287.4°C), oligoethylene glycol (boiling point: 287°C to 460°C), polyethylene glycol (PEG) (boiling point: 460°C or higher), a polyethylene glycol (PEG)-polypropylene glycol (PPG) copolymer (boiling point: 460°C or higher), diethylene glycol monohexyl ether (boiling point: 260°C), polyoxyalkylene monoalkyl ether (boiling point: 260°C or higher), polyoxyethylene sorbitan monolaurate (boiling point: 321°C or higher), other anionic fluorosurfactants (boiling point: 180°C or higher), amphoteric fluorosurfactants (boiling point: 180°C or higher), nonionic fluorosurfactants (boiling point: 180°C or higher), and amine oxide (boiling point: 180°C or higher). The above-described boiling points are boiling points at 1 atm.

The solvent used in the complexation step in the method for producing a metal carbide powder of the present invention may be one to which a resin such as a polyolefin-based compound or a polyvinyl-based compound is added. The resin to be added to the solvent may be an anionic water-soluble resin and/or a nonionic water-soluble resin.

Here, the cationic water-soluble resin is a resin having a positive charge in water at pH = 7 in the polymer and having, for example, any functional group of an amino group, an imino group, a tertiary amine group, a quaternary ammonium group, and a hydrazino group. The anionic water-soluble resin is a resin having a negative charge in water at pH = 7 in the polymer and having, for example, any functional group of a carboxyl group, a sulfone group, a sulfate group, and a phosphate group. The nonionic water-soluble resin does not correspond to the cationic water-soluble resin or the anionic water-soluble resin described above, and is, for example, a resin having any functional group of a hydroxy group, an ether group, and an amide group in a polymer.

Further, such a resin may be one containing one or more types of water-soluble homopolymers selected from the group consisting of an acrylic polymer, a urethane polymer, a styrene polymer, an olefin polymer, an amide polymer, a siloxane polymer, an epoxy polymer, a vinyl chloride polymer, and a vinyl acetate polymer, and/or water-soluble copolymers formed of two or more types of these polymers. In particular, it is preferable to contain one or more types of water-soluble homopolymers of an acrylic polymer, a styrene polymer, and an olefin polymer, and/or water-soluble copolymers formed of two or more types of these polymers.

Subsequently, in the complexation step in the method for producing a metal carbide powder of the present invention, hydrogen peroxide described below is added to the formed first mixed liquid to form a second mixed liquid.

The content of hydrogen peroxide in the second mixed liquid is preferably more than 0 mass% and 35 mass% or less, more preferably 0.001 mass% or more and 30 mass% or less, still more preferably 0.01 mass% or more and 25 mass% or less, and particularly preferably 0.1 mass% or more and 20 mass% or less. Typically, the content of the hydrogen peroxide may be 0.005 mass% or more, 0.05 mass% or more, 0.5 mass% or more, 1 mass% or more, 2 mass% or more, or 4 mass% or more. On the other hand, the content of the hydrogen peroxide may be 10 mass% or less, 5 mass% or less, 3 mass% or less, or 1 mass% or less.

The content of hydrogen peroxide in the second mixed liquid can be expressed by a molar ratio of $H_2O_2$/the metal hydroxide. The molar ratio of hydrogen peroxide to the metal hydroxide, $H_2O_2$/the metal hydroxide, is preferably more than 0 and 10 or less, more preferably 0.001 or more and 3 or less, and still more preferably 0.01 or more and 1 or less. Typically, the molar ratio $H_2O_2$/the metal hydroxide may be 0.005 or more, 0.05 or more, or 0.5 or more. On the other hand, the molar ratio $H_2O_2$/the metal hydroxide may be 0.8 or less, 0.7 or less, 0.6 or less, or 0.5 or less.

Here, $H_2O_2$ in the molar ratio $H_2O_2$/the metal hydroxide indicates the content of $H_2O_2$ in the second mixed liquid. On the other hand, the metal hydroxide in the molar ratio $H_2O_2$/the metal hydroxide indicates the content in terms of metal atom of the metal hydroxide in the second mixed liquid. When two or more types of metal hydroxides are contained, the content in terms of metal atom of the metal hydroxide is the total content in terms of metal atoms of these two or more types of metal hydroxides.

Specifically, when the metal hydroxide to be mixed is tantalum hydroxide, the molar ratio of hydrogen peroxide to tantalum $H_2O_2$/Ta is preferably more than 0 and 10 or less, more preferably 0.001 or more and 3 or less, and still more preferably 0.01 or more and 1 or less. Typically, the molar ratio $H_2O_2$/Ta may be 0.005 or more, 0.05 or more, or 0.5 or more. On the other hand, the molar ratio $H_2O_2$/Ta may be 0.8 or less, 0.7 or less, 0.6 or less, or 0.5 or less.

When the metal hydroxide to be mixed is niobium hydroxide, the molar ratio of hydrogen peroxide to niobium $H_2O_2$/Nb is preferably more than 0 and 10 or less, more preferably 0.001 or more and 3 or less, and still more preferably 0.01 or more and 1 or less. Typically, the molar ratio $H_2O_2$/Nb may be 0.005 or more, 0.05 or more, or 0.5 or more. On the other hand, the molar ratio $H_2O_2$/Nb may be 0.8 or less, 0.7 or less, 0.6 or less, or 0.5 or less.

Further, when the metal hydroxide to be mixed is niobium hydroxide and tantalum hydroxide, the molar ratio of hydrogen peroxide to niobium and tantalum $H_2O_2$/(Nb + Ta) is preferably more than 0 and 10 or less, more preferably 0.001 or more and 3 or less, and still more preferably 0.01 or more and 1 or less. Typically, the molar ratio of $H_2O_2$/(Nb + Ta) may be 0.005 or more, 0.05 or more, or 0.5 or more. On the other hand, the molar ratio $H_2O_2$/(Nb + Ta) may be 0.8 or less, 0.7 or less, 0.6 or less, or 0.5 or less.

Here, since the complexation reaction is likely to proceed by adding hydrogen peroxide under an alkaline condition, it is preferable to mix the metal hydroxide and the alkaline compound before adding hydrogen peroxide to form the first mixed liquid which is an alkaline mixed liquid.

Then, in the complexation step in the method for producing a metal carbide powder of the present invention, an organic acid described below is added to the formed second mixed liquid to form a metal carbide precursor.

Examples of the organic acid include a carboxylic acid, a polyfunctional carboxylic acid, a hydroxycarboxylic acid, and an amino acid. Examples of the carboxylic acid include butyric acid, formic acid, acetic acid, lauric acid, oleic acid, linoleic acid, and benzoic acid. Examples of the polyfunctional carboxylic acid include oxalic acid, succinic acid, malonic acid, maleic acid, glutaric acid, and citric acid. Examples of the hydroxycarboxylic acid include lactic acid, gluconic acid, tartaric acid, and malic acid. Examples of the amino acid include alanine, arginine, aspartic acid, and ethylenediaminetetraacetic acid. In particular, an organic acid containing no nitrogen atom is preferable, for example, a carboxylic acid, a polyfunctional carboxylic acid, or a hydroxycarboxylic acid is preferable, and citric acid, tartaric acid, or lactic acid is more preferable. In addition, a polyfunctional carboxylic acid is more preferable, and citric acid which is an organic acid containing no nitrogen atom and is a polyfunctional carboxylic acid is most preferable. The organic acid also includes various isomers (such as structural isomers and optical isomers) of the compounds described above. Further, as the organic acid, one or more types of organic acids of the above-described compounds may be used.

The content of the organic acid in the metal carbide precursor is preferably more than 0 mass% and less than 100 mass%, more preferably 1 mass% or more and 40 mass% or less, and preferably 3 mass% or more and 15 mass% or less. Typically, the content of the organic acid may be 0.1 mass% or more, 0.5 mass% or more, 2 mass% or more, 5 mass% or more, 8 mass% or more, or 10 mass% or more. On the other hand, the content of the organic acid may be 30 mass% or less, 25 mass% or less, 20 mass% or less, or 10 mass% or less. Here, when the organic acid to be added to the second mixed liquid is a mixture of two or more types of organic acids, the content of the organic acid is the total content of the two or more types of organic acids added.

The content of the organic acid in the metal carbide precursor can be expressed by a molar ratio of the organic acid/the metal hydroxide. It is preferable to add the organic acid such that the molar ratio of the organic acid to the metal hydroxide: the organic acid/the metal hydroxide is more than 0 and 500 or less, and from the viewpoint of stability of the metal carbide precursor and cost reduction, the molar ratio is more preferably 0.01 or more and 100 or less, still more preferably 0.1 or more and 9 or less, and particularly preferably 0.1 or more and 6 or less. Typically, the molar ratio: the organic acid/the metal hydroxide may be 0.005 or more, 0.5 or more, 1 or more, 2 or more, 3 or more, or 5 or more. On the other hand, the molar ratio: the organic acid/the metal hydroxide may be 200 or less, 50 or less, 40 or less, 30 or less, 20 or less, 10 or less, 8 or less, or 5 or less.

Here, the organic acid in the molar ratio: the organic acid/the metal hydroxide indicates the content of the organic acid in the metal carbide precursor. When two or more types of organic acids are contained, the content of the organic acid is the total content of these two or more types of organic acids. On the other hand, the metal hydroxide in the molar ratio: the organic acid/the metal hydroxide indicates the content in terms of metal atom of the metal hydroxide in the metal carbide precursor. When two or more types of metal hydroxides are contained, the content in terms of metal atom of the metal hydroxide is the total content in terms of metal atoms of these two or more types of metal hydroxides.

For example, when the metal hydroxide to be mixed is tantalum hydroxide, it is preferable to add the organic acid such that the molar ratio of the organic acid to tantalum: the organic acid/Ta is more than 0 and 500 or less, and from the viewpoint of stability of the metal carbide precursor and cost reduction, the molar ratio is more preferably 0.01 or more and 100 or less, still more preferably 0.1 or more and 9 or less, and particularly preferably 0.1 or more and 6 or less. Typically, the molar ratio: the organic acid/Ta may be 0.005 or more, 0.5 or more, 1 or more, 2 or more, 3 or more, or 5 or more. On the other hand, the molar ratio: the organic acid/Ta may be 200 or less, 50 or less, 40 or less, 30 or less, 20 or less, 10 or less, 8 or less, or 5 or less.

When the metal hydroxide to be mixed is niobium hydroxide, it is preferable to add the organic acid such that the molar ratio of the organic acid to niobium: the organic acid/Nb is more than 0 and 500 or less, and from the viewpoint of stability of the metal carbide precursor and cost reduction, the molar ratio is more preferably 0.01 or more and 100 or less, still more preferably 0.1 or more and 9 or less, and particularly preferably 0.1 or more and 6 or less. Typically, the molar ratio: the organic acid/Nb may be 0.005 or more, 0.5 or more, 1 or more, 2 or more, 3 or more, or 5 or more. On the other hand, the molar ratio: the organic acid/Nb may be 200 or less, 50 or less, 40 or less, 30 or less, 20 or less, 10 or less, 8 or less, or 5 or less.

When the metal hydroxide to be mixed is niobium hydroxide and tantalum hydroxide, it is preferable to add the organic acid such that the molar ratio of the organic acid to niobium and tantalum: the organic acid/(Nb + Ta) is more than 0 and 500 or less, and from the viewpoint of stability of the metal carbide precursor and cost reduction, the molar ratio is more preferably 0.01 or more and 100 or less, still more preferably 0.1 or more and 9 or less, and particularly preferably 0.1 or more and 6 or less. Typically, the molar ratio: the organic acid/(Nb + Ta) may be 0.005 or more, 0.5 or more, 1 or more, 2 or more, 3 or more, or 5 or more. On the other hand, the molar ratio: the organic acid/(Nb + Ta) may be 200 or less, 50 or less, 40 or less, 30 or less, 20 or less, 10 or less, 8 or less, or 5 or less.

The complexation step in the method for producing a metal carbide powder of the present invention described above can be performed at normal temperature (25°C) without needing to perform heating.

It is presumed that at least a part of the metal carbide precursor formed in this manner forms a peroxo complex containing a metal element derived from the metal hydroxide.

Subsequently, in the carbonization step in the method for producing a metal carbide powder of the present invention, the metal carbide precursor is fired to form a metal carbide.

By the complexation step in the method for producing a metal carbide powder of the present invention, the formed metal carbide precursor is placed in a stationary furnace and fired in the air at a firing temperature of 1,000°C or higher and 1,900°C or lower for a firing time of 1 hour or more and 12 hours or less to form a metal carbide.

In the powdering step in the method for producing a metal carbide powder of the present invention, the metal carbide is crushed to form a metal carbide powder.

The metal carbide formed by the carbonization step in the method for producing a metal carbide powder of the present invention is crushed using a ball mill, a jet mill, a cutter mill, or the like to form the metal carbide powder of the present invention. The undersize (on the fine particle side) obtained by classifying the crushed metal carbide powder with a sieve or the like may be used as the metal carbide powder of the present invention. The oversize (on the coarse particle side) may be used after being subjected to the crushing step again and classification. The sieve used for classification preferably has a mesh size of 30 to 1,000 $\mu$m.

It can be checked that the metal carbide powder (sample) of the present invention formed by the method for producing a metal carbide powder of the present invention described above is a carbide from a peak of an X-ray diffraction pattern obtained by performing powder X-ray diffraction measurement according to the following X-ray diffraction measurement conditions and X-ray diffraction analysis conditions.

=X-ray diffraction measurement conditions=

· Apparatus: MiniFlex II (manufactured by Rigaku Corporation)
· Measurement range (2θ): 5 to 90°
· Sampling width: 0.02°
· Scanning speed: 2.0°/min

· X-**ray: CuK**α **ray**

· Voltage: 30 kV
· Current: 15 mA
· Divergence slit: 1.25°
· Scattering slit: 1.25°
· Light receiving slit: 0.3 mm

=X-ray diffraction analysis conditions=

· Data analysis software PDXL2 manufactured by Rigaku Corporation is used.
· In order to clarify the peak top, the peak is smoothed by b-spline.

The fluidity of the metal carbide powder of the present invention formed by the method for producing a metal carbide powder of the present invention described above can be determined as follows. A sample of the metal carbide powder of the present invention is put into an A.B.D powder characteristic measuring instrument manufactured by TSUTSUI RIKAGAKU KIKAI CO., LTD. with a filter having a pore diameter of 850 μm or 1,000 μm set therein, and the filter is vibrated for 1 minute to recover the sample that has passed through the filter. The fluidity of the metal carbide powder of the present invention can be determined by measuring the recovery amount of the sample and calculating the recovery rate from recovery rate = recovery amount (g)/10 g × 100.

The metal carbide powder of the present invention can be produced by performing the respective steps in the method for producing a metal carbide powder of the present invention described above. The metal carbide powder of the present invention can also be produced by performing the following steps in addition to the respective steps described above.

The method for producing a metal carbide powder of the present invention may include a drying step of drying the metal carbide precursor.

Excess hydrogen peroxide and ammonia contained in the metal carbide precursor can be removed by drying the metal carbide precursor formed by the complexation step using a drying method described later.

By removing excess hydrogen peroxide from the metal carbide precursor, it is possible to prevent a change in solution due to volatilization of hydrogen peroxide, and it becomes easy to use from a safety or legal standpoint. Specifically, when the content of hydrogen peroxide in the metal carbide precursor is 6 mass% or less, the metal carbide precursor is excluded from the deleterious substance and deleterious substance control law, and it becomes easy to use in terms of safety and in a storage method. In addition, by removing excess ammonia contained in the metal carbide precursor, it becomes easy to use also in terms of safety and work.

As an example of the drying step in the method for producing a metal carbide powder of the present invention, the heating temperature in the drying step is preferably lower than 100°C.

When the heating temperature in the drying step is 25°C or higher and lower than 100°C, excess hydrogen peroxide and ammonia components contained in the metal carbide precursor are volatilized to obtain a peroxo complex powder being a white powder. The heating temperature is more preferably 90°C or lower. The heating time is preferably 1 hour or more and 100 hours or less, and preferably 5 hours or more and 20 hours or less.

As another example of the drying step in the method for producing a metal carbide powder of the present invention, the heating temperature in the drying step is preferably 100°C or higher.

When the heating temperature in the drying step is 100°C or higher and 200°C or lower, excess hydrogen peroxide and ammonia components contained in the metal carbide precursor are volatilized to obtain a peroxo complex powder being a green white powder. The heating temperature is more preferably 110°C or higher. The heating time is preferably 1 hour or more and 100 hours or less, and preferably 5 hours or more and 20 hours or less.

Further, as still another example of the drying step in the method for producing a metal carbide powder of the present invention, when the drying method is vacuum drying without heating, a peroxo complex powder being a white powder is obtained. The heating time is preferably 1 hour or more and 100 hours or less, and preferably 5 hours or more and 20 hours or less. In the case of vacuum drying, excess hydrogen peroxide and ammonia components contained in the metal carbide precursor are not removed and remain.

The method for producing a metal carbide powder of the present invention may include a crushing step of crushing the metal carbide precursor dried in the drying step.

The peroxo complex powder being the dried metal carbide precursor obtained in each drying step described above is crushed using a ball mill, a jet mill, a cutter mill, or the like. Crushing the peroxo complex powder is preferable from the viewpoint that the peroxo complex powder is easily dissolved in pure water in the dissolution step.

The method for producing a metal carbide of the present invention is a method for producing a metal carbide in a film form using a complex polymerization method, and includes a complexation step of mixing a metal hydroxide and an alkaline compound to form a first mixed liquid, adding hydrogen peroxide to the first mixed liquid to form a second mixed liquid, and further adding an organic acid to the second mixed liquid to form a metal carbide precursor, a dissolution step of dispersing the metal carbide precursor in pure water to form a metal carbide intermediate, and a carbonization step of applying the metal carbide intermediate onto a base material, followed by firing to form a metal carbide film containing a metal carbide on the base material.

For convenience of description, the method for producing a metal carbide of the present invention including a carbonization step of forming a metal carbide film containing a metal carbide on a base material will be described as the method for producing a metal carbide film of the present invention.

In the complexation step in the method for producing a metal carbide film of the present invention, a metal hydroxide and an alkaline compound are mixed to form a first mixed liquid, hydrogen peroxide is added to the first mixed liquid to form a second mixed liquid, and an organic acid is further added to the second mixed liquid to form a metal carbide precursor.

The metal carbide precursor formed in the complexation step in the method for producing a metal carbide film of the present invention is preferably in a state of a transparent solution without precipitation from the viewpoint of uniform film formation. The particle diameter of the metal carbide precursor is preferably smaller, and is preferably 1,000 nm or less from the viewpoint of temporal stability, more preferably 500 nm or less, and particularly preferably 100 nm or less. Typically, the particle diameter may be 900 nm or less, 800 nm or less, 700 nm or less, 600 nm or less, 400 nm or less, 300 nm or less, 200 nm or less, 50 nm or less, 30 nm or less, 20 nm or less, 10 nm or less, 6 nm or less, 2 nm or less, 1 nm or less, or 0.6 nm or less. On the other hand, the particle diameter of the particle is preferably 1 nm or more, more preferably 2 nm or more, still more preferably 6 nm or more, and particularly preferably 10 nm or more, and further may be 100 nm or more, 200 nm or more, 300 nm or more, 400 nm or more, or 500 nm or more. Typically, the particle diameter is 10 nm or more and 800 nm or less.

Typically, the particle diameter of the metal carbide precursor is 10 nm or more and 800 nm or less. From the viewpoint of forming a thick film, the metal carbide precursor may be an aqueous dispersion liquid in which the metal carbide precursor is deposited.

The particle diameter of the metal carbide precursor formed in the complexation step in the method for producing a metal carbide film of the present invention is a particle diameter (D50) as determined by particle diameter distribution measurement using a dynamic light scattering method.

Here, the dynamic light scattering method is a method in which a light scattering intensity from a group of particles that perform Brownian motion by irradiating a solution such as a suspension solution with light such as laser light is measured, and a particle diameter and a distribution are obtained from a temporal variation of the intensity. Specifically, a method for evaluating the particle size distribution is performed in accordance with JIS Z 8828:2019 "Particle size analysis-Dynamic light scattering" using a zeta potential/particle size/molecular weight measurement system (ELSZ-2000 ZS, manufactured by Otsuka Electronics Co., Ltd.). In addition, if necessary, one diluted 1,000 times with pure water is used as a measurement sample, and in order to remove dust and the like in the measurement sample immediately before measurement, the measurement sample is filtered through a filter having a pore diameter of 11 $\mu$m, and an ultrasonic treatment is performed for 3 minutes with an ultrasonic cleaner (VS-100 III, manufactured by AS ONE Corporation). Further, the liquid temperature of the measurement sample was adjusted to 25°C. The particle diameter (D50) refers to a median diameter (D50) that is a particle diameter indicating a 50% cumulative value of a cumulative distribution curve.

The complexation step in the method for producing a metal carbide film of the present invention is the same as the complexation step in the method for producing a metal carbide powder of the present invention except for the points described above, and therefore the detailed description thereof is omitted.

In the dissolution step in the method for producing a metal carbide film of the present invention, a metal carbide intermediate in which the metal carbide precursor is dispersed in pure water is formed.

Pure water is added to the metal carbide precursor obtained by the complexation step in the method for producing a metal carbide film of the present invention, followed by stirring for 10 minutes to form a metal carbide intermediate. When the metal carbide intermediate of the present invention is applied to a base material in a carbonization step described later, the content thereof is preferably adjusted so as to facilitate application, and the solid content of the metal carbide intermediate of the present invention is preferably adjusted to 1 mass% or more and 70 mass% or less. The dissolution step can be performed at normal temperature (25°C) without needing to perform heating.

The solid content of the metal carbide intermediate of the present invention is preferably adjusted according to the type and material of the base material, and is more preferably 2 mass% or more and 65 mass% or less, still more preferably 4 mass% or more and 60 mass% or less, particularly preferably 5 mass% or more and 55 mass% or less, and more particularly preferably 10 mass% or more and 50 mass% or less.

When tantalum hydroxide is used as the metal hydroxide, the tantalum content in the metal carbide intermediate of the present invention may be typically 5 mass% or more and 30 mass% or less, 5 mass% or more and 25 mass% or less, 5 mass% or more and 20 mass% or less, 5 mass% or more and 15 mass% or less, or 5 mass% or more and 10 mass% or less.

Here, the tantalum content in the metal carbide intermediate of the present invention is calculated by appropriately diluting the intermediate with dilute hydrochloric acid as necessary, and measuring the Ta mass fraction in terms of Ta in accordance with JIS K 0116:2014 using ICP emission spectrometry (AG-5110, manufactured by Agilent Technologies, Inc.).

When niobium hydroxide is used as the metal hydroxide, the niobium content in the metal carbide intermediate of the present invention may be typically 5 mass% or more and 30 mass% or less, 5 mass% or more and 25 mass% or less, 5 mass% or more and 20 mass% or less, 5 mass% or more and 15 mass% or less, or 5 mass% or more and 10 mass% or less.

The niobium content in the metal carbide intermediate of the present invention can be calculated by measuring the Nb mass fraction in terms of Nb in the same manner as the tantalum content described above.

In the dissolution step, if the metal carbide precursor has a suitable solid content when applied onto a base material, it is not necessary to adjust the solid content by adding pure water to the metal carbide precursor obtained in the complexation step.

In the carbonization step in the method for producing a metal carbide film of the present invention, the metal carbide intermediate is applied onto a base material and fired to form a metal carbide film containing a metal carbide on the base material. Examples of the base material include a crucible, a furnace material, an electrode, a fiber, a filtration device, a filter, a protective tube, a heater tube, a burner nozzle, and a fireproof fixture. In addition, examples of the material include carbon, a metal, and a ceramic, and examples of the metal include a metal carbide, a metal oxide, and a metal nitride.

Specifically, the metal carbide intermediate obtained by the dissolution step in the method for producing a metal carbide film of the present invention is filtered through, for example, a filter having a pore diameter of 1 $\mu$m, and applied to the surface of the base material using a brush or the like. Then, the base material with the metal carbide intermediate applied thereto is placed in a stationary furnace and fired in the air at a firing temperature of 1,000°C or higher and 1,900°C or lower for a firing time of 1 hour or more and 12 hours or less to form a metal carbide film on the surface of the base material. In addition to the method of application to the surface of the base material using a brush or the like, a method of spraying to the surface of the base material with a spray or a method of immersing the base material in a container containing the metal carbide intermediate may be used.

The metal carbide film of the present invention can be produced by performing the respective steps in the method for producing a metal carbide film of the present invention described above. The metal carbide film of the present invention can also be produced by performing the following steps in addition to the respective steps described above.

The method for producing a metal carbide film of the present invention may include a drying step of drying the metal carbide precursor formed by the complexation step as a pre-step of the dissolution step of forming a metal carbide intermediate in which the metal carbide precursor is dispersed in pure water.

Excess hydrogen peroxide and ammonia contained in the metal carbide precursor can be removed by drying the metal carbide precursor formed by the complexation step using the drying method described above.

By removing excess hydrogen peroxide from the metal carbide precursor, when pure water is added to the metal carbide precursor and the formed metal carbide intermediate is applied to the surface of the base material in the carbonization step, foaming does not occur and the metal carbide intermediate can be uniformly applied. In addition, by removing excess ammonia contained in the metal carbide precursor, it becomes easy to use also in terms of safety and work.

The drying step in the method for producing a metal carbide film of the present invention is the same as the drying step in the method for producing a metal carbide powder of the present invention described above, and therefore the detailed description thereof is omitted.

The method for producing a metal carbide film of the present invention may include a crushing step of crushing the metal carbide precursor dried in the drying step in the same manner as the method for producing a metal carbide powder of the present invention described above. The crushing step in the method for producing a metal carbide film of the present invention is the same as the crushing step in the method for producing a metal carbide powder of the present invention described above, and therefore the description thereof is omitted.

A method for producing a metal carbide precursor of the present invention is a method for producing a metal carbide precursor for forming a metal carbide using a complex polymerization method, and includes a complexation step of mixing a metal hydroxide and an alkaline compound to form a first mixed liquid, adding hydrogen peroxide to the first mixed liquid to form a second mixed liquid, and further adding an organic acid to the second mixed liquid to form a metal carbide precursor.

The complexation step in the method for producing a metal carbide precursor of the present invention is the same as the complexation step in the method for producing a metal carbide of the present invention described above, and therefore the detailed description thereof is omitted.

The method for producing a metal carbide precursor of the present invention may include a drying step of drying the metal carbide precursor formed by the complexation step.

Here, the drying step in the method for producing a metal carbide precursor of the present invention is the same as the drying step in the method for producing a metal carbide of the present invention described above, and therefore the description thereof is omitted.

A method for producing a metal carbide intermediate of the present invention is a method for producing a metal carbide intermediate for forming a metal carbide using a complex polymerization method, and includes a complexation step of mixing a metal hydroxide and an alkaline compound to form a first mixed liquid, adding hydrogen peroxide to the first mixed liquid to form a second mixed liquid, and further adding an organic acid to the second mixed liquid to form a metal carbide precursor, and a dissolution step of dispersing the metal carbide precursor in pure water to form a metal carbide intermediate.

The complexation step and the dissolution step in the method for producing a metal carbide intermediate of the present invention is the same as the complexation step and the dissolution step in the method for producing a metal carbide of the present invention described above, and therefore the detailed description thereof is omitted.

The method for producing a metal carbide intermediate of the present invention may include a drying step of drying the metal carbide precursor formed by the complexation step.

Here, the drying step in the method for producing a metal carbide intermediate of the present invention is the same as the drying step in the method for producing a metal carbide of the present invention described above, and therefore the description thereof is omitted.

In the method for producing a metal carbide intermediate of the present invention, the heating temperature in the drying step is preferably lower than 100°C in the same manner as in the drying step in the method for producing a metal carbide of the present invention described above.

In the method for producing a metal carbide intermediate of the present invention, the heating temperature in the drying step is preferably 100°C or higher in the same manner as in the drying step in the method for producing a metal carbide of the present invention described above.

Further, in the method for producing a metal carbide intermediate of the present invention, vacuum drying without heating may be performed in the same manner as in the drying step in the method for producing a metal carbide of the present invention described above.

The method for producing a metal carbide intermediate of the present invention includes a crushing step of crushing the metal carbide precursor dried in the drying step.

Here, the crushing step in the method for producing a metal carbide intermediate of the present invention is the same as the crushing step in the method for producing a metal carbide of the present invention described above, and therefore the description thereof is omitted.

The metal carbide powder of the present invention has a specific surface area as measured by a BET method of 1 $m^2$/g or more and a circularity of 0.78 or more.

The metal carbide powder of the present invention has high fluidity even though being in an ultrafine particle form when the specific surface area as measured by a BET method is 1 $m^2$/g or more and the circularity is 0.78 or more.

It is preferable that the metal carbide powder of the present invention has a specific surface area as measured by a BET method of 1 $m^2$/g or more from the viewpoint that the void fraction in the powder-packed layer is reduced, and the reactivity with other substances is increased when the metal carbide powder is used as an additive. The specific surface area as measured by a BET method of the metal carbide powder of the present invention is more preferably 2 $m^2$/g or more, and still more preferably 4 $m^2$/g or more.

Here, the specific surface area as measured by a BET method of the metal carbide powder of the present invention can be measured in accordance with JIS Z 8830 using a fully automatic specific surface area measuring apparatus (Macsorb HM model-1230).

Further, it is preferable that the metal carbide powder of the present invention has a circularity of 0.78 or more from the viewpoint that the void fraction in the powder-packed layer is reduced, and the reactivity with other substances is increased when the metal carbide powder is used as an additive. The circularity of the metal carbide powder of the present invention is more preferably 0.8 or more, and still more preferably 0.9 or more. On the other hand, the upper limit of the circularity is not particularly limited, and may be 1 or less.

Here, the circularity of the metal carbide powder of the present invention is calculated by "circularity = 1/major axis $\times$ minor axis", and the arithmetic average value of the circularity of a plurality of particles is defined as "circularity". Here, the "major axis" and the "minor axis" are calculated as follows. An SEM image of primary particles of the metal carbide powder of the present invention is measured at a magnification at which the primary particles of the metal carbide powder of the present invention can be measured using a scanning electron microscope (SEM) (S-4800, manufactured by Hitachi High-Technologies Corporation). Then, the "major axis" and "minor axis" of 20 randomly extracted particles are measured using ImageJ which is image analysis software.

The metal carbide powder of the present invention preferably has a primary particle diameter as measured by a BET method of 0.7 $\mu$m or less and a circularity of 0.78 or more.

When the primary particle diameter as measured by a BET method is 0.7 $\mu$m or less and the circularity is 0.78 or more, the metal carbide powder of the present invention has high fluidity even though being in an ultrafine particle form.

It is preferable that the metal carbide powder of the present invention has a primary particle diameter as measured by a BET method of 0.7 $\mu$m or less from the viewpoint that the void fraction in the powder-packed layer is reduced, and the reactivity with other substances is increased when the metal carbide powder is used as an additive. The primary particle diameter as measured by a BET method of the metal carbide powder of the present invention is more preferably 0.4 $\mu$m or less, and still more preferably 0.2 $\mu$m or less.

Here, the primary particle diameter D as measured by a BET method of the metal carbide powder of the present invention is calculated by the following formula (1).

[Math. 1]

$$D = \frac{6}{S\rho} \quad \cdots (1)$$

In formula (1), "D" denotes the primary particle diameter ($\mu$m) of the metal carbide powder of the present invention, "S" denotes the specific surface area ($m^2$/g) as measured by a BET method, and "p" denotes the density (g/cm$^3$) of the metal carbide of the present invention. For example, the density of tantalum carbide (TaC) is 13.9 (g/cm$^3$) and the density of niobium carbide (NbC) is 8.57 (g/cm$^3$).

In addition, the metal carbide powder of the present invention preferably contains tantalum carbide, niobium carbide, titanium carbide, tungsten carbide, molybdenum carbide, zirconium carbide, or the like, and more preferably contains tantalum carbide or niobium carbide.

In the metal carbide powder of the present invention, it is preferable that the chlorine content in the metal carbide powder is 100 ppm or less from the viewpoint that hydrogen peroxide does not remain in the metal carbide powder of the present invention. In the metal carbide powder of the present invention, the chlorine content in the metal carbide powder is more preferably 50 ppm or less, and still more preferably 25 ppm or less. In the present description, unless otherwise specified, "ppm" refers to "ppm by mass".

Here, the chlorine content in the metal carbide powder of the present invention can be measured by combustion ion chromatography. Specifically, an appropriate amount of a sample is collected on a ceramic board, and by combustion ion chromatography (AQF-2100H, manufactured by Nitto Seiko Analytech Co., Ltd.), the sample is heated in an argon (Ar) atmosphere at 1,000°C for 10 minutes, and the amount of generated chlorine is measured, whereby the chlorine content in the metal carbide powder of the present invention can be determined.

In the metal carbide powder of the present invention, it is preferable that the nitrogen content in the metal carbide powder is 1,000 ppm or less from the viewpoint that no alkaline compound, for example, ammonia water remains in the metal carbide powder of the present invention. In the metal carbide powder of the present invention, the nitrogen content in the metal carbide powder is more preferably 800 ppm or less, and still more preferably 500 ppm or less. Typically, the nitrogen content in the metal carbide powder may be 500 ppm or less, 250 ppm or less, 100 ppm or less, 50 ppm or less, or 25 ppm or less.

Here, the nitrogen content in the metal carbide powder of the present invention can be measured by a thermal conductivity method using an oxygen/nitrogen analyzer (ON836, manufactured by LECO Corporation). Specifically, an appropriate amount of a sample is enclosed in a Ni capsule, and the nitrogen content in the metal carbide powder of the present invention can be determined by a thermal conductivity method using the oxygen/nitrogen analyzer.

In addition, the metal carbide powder of the present invention may contain a component other than a component derived from a metal hydroxide, for example, a component derived from tantalum or tantalum hydroxide or a component derived from niobium or niobium hydroxide (referred to as "another component") as long as the action and effect thereof are not inhibited. Examples of another component include Li, Mg, Si, Ca, Mn, Ni, Cu, Zn, Sr, and Ba. However, the present invention is not limited thereto. The content of another component in the metal carbide powder of the present invention is preferably less than 5 mass%, more preferably less than 4 mass%, and still more preferably less than 3 mass% in terms of element (in terms of metal element or in terms of non-metal element). The metal carbide powder of the present invention is not intended and is assumed to contain unavoidable impurities. The content of the unavoidable impurities is preferably less than 0.01 mass%.

In addition, the cemented carbide tool of the present invention contains the above-described metal carbide powder of the present invention.

Since the cemented carbide tool of the present invention contains the metal carbide powder of the present invention, even though the powder is in an ultrafine particle form, the fluidity is high, the mixability with tungsten carbide is high, and the reactivity thereafter is also excellent, and therefore the tool has performance required for the cemented carbide tool such as chipping resistance, plastic deformation resistance, and wear resistance.

A metal carbide intermediate dispersion liquid of the present invention contains a metal compound, an alkaline compound, hydrogen peroxide, and an organic acid, in which a particle diameter (D50) of particles in the metal carbide intermediate dispersion liquid as determined by particle diameter distribution measurement using a dynamic light scattering method is 1,000 nm or less.

The metal compound is preferably a hydroxide, a chloride, or an alkoxide of tantalum, niobium, titanium, zirconium, hafnium, bismuth, molybdenum, or tungsten.

The metal compound is more preferably a metal hydroxide. Examples of the metal hydroxide include hydroxides of tantalum, niobium, titanium, zirconium, hafnium, bismuth, molybdenum, and tungsten, and particularly tantalum hydroxide and/or niobium hydroxide is more preferable.

The alkaline compound is preferably one or more types of alkaline compounds selected from ammonia, sodium hydroxide, potassium hydroxide, lithium hydroxide, calcium hydroxide, and an organic nitrogen compound. Examples of the organic nitrogen compound include an amine compound, a quaternary ammonium compound, a guanidine compound, and an azole compound, and the organic nitrogen compound is preferably an amine compound or a quaternary ammonium compound, and more preferably methylamine, dimethylamine, tetramethylammonium hydroxide (TMAH), or tetraethylammonium hydroxide (TEAH). The alkaline compound is particularly preferably ammonia.

The alkaline compound content in the metal carbide intermediate dispersion liquid of the present invention is preferably more than 0 mass% and less than 50 mass%, and more preferably 0.01 mass% or more and 4 mass% or less. From the viewpoint of reactivity and dispersibility, it is desirable that the content of the alkaline compound is larger. On the other hand, since it is a volatile component, a low content is desirable from the viewpoint of preventing volatilization at the time of forming a film in a subsequent step. Typically, the alkaline compound content may be 0.1 mass% or more, 0.5 mass% or more, 1 mass% or more, 2 mass% or more, 3 mass% or more, 5 mass% or more, 8 mass% or more, or 10 mass% or more. On the other hand, the alkaline compound content may be 30 mass% or less, 25 mass% or less, 20 mass% or less, or 10 mass% or less.

The content of the alkaline compound in the metal carbide intermediate dispersion liquid of the present invention can be expressed by a molar ratio of the alkaline compound/the metal compound. The molar ratio of the alkaline compound/the metal compound is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of the alkaline compound/the metal compound may be 0.005 or more, 0.05 or more, or 0.5 or more. On the other hand, the molar ratio of the alkaline compound/the metal compound may be 15 or less, 10 or less, 8 or less, 5 or less, 4 or less, 3 or less, 2 or less, 1 or less, 0.5 or less, or 0.1 or less.

Here, the alkaline compound in the molar ratio of the alkaline compound/the metal compound indicates the content of the alkaline compound in the metal carbide intermediate dispersion liquid of the present invention. When the metal carbide intermediate dispersion liquid of the present invention contains two or more types of alkaline compounds, the content of the alkaline compound is the total content of these two or more types of alkaline compounds. On the other hand, the metal compound in the molar ratio of the alkaline compound/the metal compound indicates the content in terms of metal atom of the metal compound in the metal carbide intermediate dispersion liquid of the present invention. When the metal carbide intermediate dispersion liquid of the present invention contains two or more types of metal compounds, the content in terms of metal atom of the metal compound is the total content in terms of metal atoms of these two or more types of alkaline compounds.

When the metal compound contained in the metal carbide intermediate dispersion liquid of the present invention is tantalum hydroxide, the molar ratio of the alkaline compound/Ta is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of the alkaline compound/Ta may be 0.005 or more, 0.05 or more, or 0.5 or more. On the other hand, the molar ratio of the alkaline compound/Ta may be 15 or less, 10 or less, 8 or less, 5 or less, 4 or less, 3 or less, 2 or less, 1 or less, 0.5 or less, or 0.1 or less.

When the metal compound contained in the metal carbide intermediate dispersion liquid of the present invention is niobium hydroxide, the molar ratio of the alkaline compound/Nb is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of the alkaline compound/Ta may be 0.005 or more, 0.05 or more, or 0.5 or more. On the other hand, the molar ratio of the alkaline compound/Nb may be 15 or less, 10 or less, 8 or less, 5 or less, 4 or less, 3 or less, 2 or less, 1 or less, 0.5 or less, or 0.1 or less.

Further, when the metal compound contained in the metal carbide intermediate dispersion liquid of the present invention is niobium hydroxide and tantalum hydroxide, the molar ratio of the alkaline compound to niobium and tantalum: the alkaline compound/(Nb + Ta) is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of the alkaline compound/(Nb + Ta) may be 0.005 or more, 0.05 or more, or 0.5 or more. On the other hand, the molar ratio of the alkaline compound/(Nb + Ta) may be 15 or less, 10 or less, 8 or less, 5 or less, 4 or less, 3 or less, 2 or less, 1 or less, 0.5 or less, or 0.1 or less.

When the alkaline compound is, for example, ammonia, the ammonia content is preferably more than 0 mass% and less than 50 mass%, and more preferably 0.01 mass% or more and 4 mass% or less. From the viewpoint of reactivity and dispersibility, it is desirable that the content of ammonia is larger. On the other hand, since it is a volatile component, a low content is desirable from the viewpoint of preventing volatilization at the time of forming a film in a subsequent step. Typically, the ammonia content may be 0.1 mass% or more, 0.5 mass% or more, 1 mass% or more, 2 mass% or more, 3 mass% or more, 5 mass% or more, 8 mass% or more, or 10 mass% or more. On the other hand, the ammonia content may be 30 mass% or less, 25 mass% or less, 20 mass% or less, or 10 mass% or less.

The content of ammonia contained in the metal carbide intermediate dispersion liquid of the present invention can be expressed by a molar ratio of $NH_3$/the metal compound. The molar ratio of $NH_3$/the metal compound is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of $NH_3$/the metal compound may be 0.005 or more, 0.05 or more, or 0.5 or more. On the other hand, the molar ratio of $NH_3$/the metal compound may be 15 or less, 10 or less, 8 or less, 5 or less, 4 or less, 3 or less, 2 or less, 1 or less, 0.5 or less, or 0.1 or less.

When the metal compound contained in the metal carbide intermediate dispersion liquid of the present invention is tantalum hydroxide, the molar ratio of $NH_3$/Ta is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of $NH_3$/Ta may be 0.005 or more, 0.05 or more, or 0.5 or more. On the other hand, the molar ratio of $NH_3$/Ta may be 15 or less, 10 or less, 8 or less, 5 or less, 4 or less, 3 or less, 2 or less, 1 or less, 0.5 or less, or 0.1 or less.

When the metal compound contained in the metal carbide intermediate dispersion liquid of the present invention is niobium hydroxide, the molar ratio of $NH_3$/Nb is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of $NH_3$/Ta may be 0.005 or more, 0.05 or more, or 0.5 or more. On the other hand, the molar ratio of $NH_3$/Nb may be 15 or less, 10 or less, 8 or less, 5 or less, 4 or less, 3 or less, 2 or less, 1 or less, 0.5 or less, or 0.1 or less.

Further, when the metal compound contained in the metal carbide intermediate dispersion liquid of the present invention is niobium hydroxide and tantalum hydroxide, the molar ratio of the ammonia to niobium and tantalum: $NH_3$/(Nb + Ta) is preferably more than 0 and 100 or less, more preferably 0.001 or more and 100 or less, still more preferably 0.01 or more and 50 or less, particularly preferably 0.1 or more and 30 or less, and more particularly preferably 4 or more and 20 or less. Typically, the molar ratio of $NH_3$/(Nb + Ta) may be 0.005 or more, 0.05 or more, or 0.5 or more. On the other hand, the molar ratio of $NH_3$/(Nb + Ta) may be 15 or less, 10 or less, 8 or less, 5 or less, 4 or less, 3 or less, 2 or less, 1 or less, 0.5 or less, or 0.1 or less.

The alkaline compound contained in the metal carbide intermediate dispersion liquid of the present invention enables reduction in the amount of the alkaline compound by replenishing a solvent volatilized by heating or the like after the preparation of the metal carbide intermediate dispersion liquid.

The content of hydrogen peroxide in the metal carbide intermediate dispersion liquid of the present invention is preferably more than 0 mass% and 35 mass% or less, more preferably 0.001 mass% or more and 30 mass% or less, still more preferably 0.01 mass% or more and 25 mass% or less, and particularly preferably 0.1 mass% or more and 20 mass% or less. Typically, the content of the hydrogen peroxide may be 0.005 mass% or more, 0.05 mass% or more, 0.5 mass% or more, 1 mass% or more, 2 mass% or more, or 4 mass% or more. On the other hand, the content of the hydrogen peroxide may be 10 mass% or less, 5 mass% or less, 3 mass% or less, or 1 mass% or less.

The content of hydrogen peroxide in the metal carbide intermediate dispersion liquid of the present invention can be expressed by a molar ratio of $H_2O_2$/the metal compound. The molar ratio of hydrogen peroxide to the metal compound, $H_2O_2$/the metal compound, is preferably more than 0 and 10 or less, more preferably 0.001 or more and 3 or less, and still more preferably 0.01 or more and 1 or less. Typically, the molar ratio $H_2O_2$/the metal compound may be 0.005 or more, 0.05 or more, or 0.5 or more. On the other hand, the molar ratio $H_2O_2$/the metal compound may be 0.8 or less, 0.7 or less, 0.6 or less, or 0.5 or less.

Here, $H_2O_2$ in the molar ratio $H_2O_2$/the metal compound indicates the content of $H_2O_2$ in the metal carbide intermediate dispersion liquid of the present invention. On the other hand, the metal compound in the molar ratio $H_2O_2$/the metal compound indicates the content in terms of metal atom of the metal compound in the metal carbide intermediate dispersion liquid of the present invention. When the metal carbide intermediate dispersion liquid of the present invention contains two or more types of metal compounds, the content in terms of metal atom of the metal compound is the total content of two or more types of metal compounds in terms of metal atoms.

When the metal compound contained in the metal carbide intermediate dispersion liquid of the present invention is, for example, tantalum hydroxide, the molar ratio of hydrogen peroxide to tantalum $H_2O_2$/Ta is preferably more than 0 and 10 or less, more preferably 0.001 or more and 3 or less, and still more preferably 0.01 or more and 1 or less. Typically, the molar ratio $H_2O_2$/Ta may be 0.005 or more, 0.05 or more, or 0.5 or more. On the other hand, the molar ratio $H_2O_2$/Ta may be 0.8 or less, 0.7 or less, 0.6 or less, or 0.5 or less.

When the metal compound contained in the metal carbide intermediate dispersion liquid of the present invention is, for example, niobium hydroxide, the molar ratio of hydrogen peroxide to niobium $H_2O_2$/Nb is preferably more than 0 and 10 or less, more preferably 0.001 or more and 3 or less, and still more preferably 0.01 or more and 1 or less. Typically, the molar ratio $H_2O_2$/Nb may be 0.005 or more, 0.05 or more, or 0.5 or more. On the other hand, the molar ratio $H_2O_2$/Nb may be 0.8 or less, 0.7 or less, 0.6 or less, or 0.5 or less.

Further, when the metal compound contained in the metal carbide intermediate dispersion liquid of the present invention is, for example, niobium hydroxide and tantalum hydroxide, the molar ratio of hydrogen peroxide to niobium and tantalum $H_2O_2$/(Nb + Ta) is preferably more than 0 and 10 or less, more preferably 0.001 or more and 3 or less, and still more preferably 0.01 or more and 1 or less. Typically, the molar ratio of $H_2O_2$/(Nb + Ta) may be 0.005 or more, 0.05 or more, or 0.5 or more. On the other hand, the molar ratio $H_2O_2$/(Nb + Ta) may be 0.8 or less, 0.7 or less, 0.6 or less, or 0.5 or less.

The content of hydrogen peroxide is preferably small from the viewpoint of safety (volatility/volatility due to reaction with other materials). On the other hand, the above-described content of hydrogen peroxide and molar ratio provide good dispersibility.

Examples of the organic acid include a carboxylic acid, a polyfunctional carboxylic acid, a hydroxycarboxylic acid, and an amino acid. Examples of the carboxylic acid include butyric acid, formic acid, acetic acid, lauric acid, oleic acid, linoleic acid, and benzoic acid. Examples of the polyfunctional carboxylic acid include oxalic acid, succinic acid, malonic acid, maleic acid, glutaric acid, and citric acid. Examples of the hydroxycarboxylic acid include lactic acid, gluconic acid, tartaric acid, and malic acid. Examples of the amino acid include alanine, arginine, aspartic acid, and ethylenediaminetetraacetic acid. In particular, an organic acid containing no nitrogen atom is preferable, for example, a carboxylic acid, a polyfunctional carboxylic acid, or a hydroxycarboxylic acid is preferable, and citric acid, tartaric acid, or lactic acid is more preferable. In addition, a polyfunctional carboxylic acid is more preferable, and citric acid which is an organic acid containing no nitrogen atom and is a polyfunctional carboxylic acid is most preferable. The organic acid also includes various isomers (such as structural isomers and optical isomers) of the compounds described above. Further, as the organic acid, one or more types of organic acids of the above-described compounds may be used.

The content of the organic acid is preferably more than 0 mass% and less than 100 mass%, more preferably 1 mass% or more and 40 mass% or less, and preferably 3 mass% or more and 15 mass% or less. Typically, the content of the organic acid may be 0.1 mass% or more, 0.5 mass% or more, 2 mass% or more, 5 mass% or more, 8 mass% or more, or 10 mass% or more. On the other hand, the content of the organic acid may be 30 mass% or less, 25 mass% or less, 20 mass% or less, or 10 mass% or less. When the metal carbide intermediate dispersion liquid of the present invention contains two or more types of organic acids, the content of the organic acid is the total content of these two or more types of organic acids.

The content of the organic acid in the metal carbide intermediate dispersion liquid of the present invention can be expressed by a molar ratio of the organic acid/the metal compound. It is preferable to add the organic acid such that the molar ratio of the organic acid to the metal compound: the organic acid/the metal compound is more than 0 and 500 or less, and from the viewpoint of stability of the metal carbide intermediate dispersion liquid of the present invention and cost reduction, the molar ratio is more preferably 0.01 or more and 100 or less, still more preferably 0.1 or more and 9 or less, and particularly preferably 0.1 or more and 6 or less. Typically, the molar ratio: the organic acid/the metal compound may be 0.005 or more, 0.5 or more, 1 or more, 2 or more, 3 or more, or 5 or more. On the other hand, the molar ratio: the organic acid/the metal compound may be 200 or less, 50 or less, 40 or less, 30 or less, 20 or less, 10 or less, 8 or less, or 5 or less.

Here, the organic acid in the molar ratio: the organic acid/the metal compound indicates the content of the organic acid in the metal carbide intermediate dispersion liquid of the present invention. When the metal carbide intermediate dispersion liquid of the present invention contains two or more types of organic acids, the content of the organic acid is the total content of these two or more types of organic acids. On the other hand, the metal compound in the molar ratio: the organic acid/the metal compound indicates the content in terms of metal atom of the metal compound in the metal carbide intermediate dispersion liquid of the present invention. When the metal carbide intermediate dispersion liquid of the present invention contains two or more types of metal compounds, the content in terms of metal atom of the metal compound is the total content in terms of metal atoms of these two or more types of alkaline compounds.

When the metal hydroxide contained in the metal carbide intermediate dispersion liquid of the present invention is tantalum hydroxide, it is preferable to add the organic acid such that the molar ratio of the organic acid to tantalum: the organic acid/Ta is more than 0 and 500 or less, and from the viewpoint of stability of the metal carbide intermediate dispersion liquid of the present invention and cost reduction, the molar ratio is more preferably 0.01 or more and 100 or less, still more preferably 0.1 or more and 9 or less, and particularly preferably 0.1 or more and 6 or less. Typically, the molar ratio: the organic acid/Ta may be 0.005 or more, 0.5 or more, 1 or more, 2 or more, 3 or more, or 5 or more. On the other hand, the molar ratio: the organic acid/Ta may be 200 or less, 50 or less, 40 or less, 30 or less, 20 or less, 10 or less, 8 or less, or 5 or less.

In the case of niobium hydroxide contained in the metal carbide intermediate dispersion liquid of the present invention, it is preferable to add the organic acid such that the molar ratio of the organic acid to niobium: the organic acid/Nb is more than 0 and 500 or less, and from the viewpoint of stability of the metal carbide intermediate dispersion liquid of the present invention and cost reduction, the molar ratio is more preferably 0.01 or more and 100 or less, still more preferably 0.1 or more and 9 or less, and particularly preferably 0.1 or more and 6 or less. Typically, the molar ratio: the organic acid/Nb may be 0.005 or more, 0.5 or more, 1 or more, 2 or more, 3 or more, or 5 or more. On the other hand, the molar ratio: the organic acid/Nb may be 200 or less, 50 or less, 40 or less, 30 or less, 20 or less, 10 or less, 8 or less, or 5 or less.

When the metal hydroxide contained in the metal carbide intermediate dispersion liquid of the present invention is niobium hydroxide and tantalum hydroxide, it is preferable to add the organic acid such that the molar ratio of the organic acid to niobium and tantalum: the organic acid/(Nb + Ta) is more than 0 and 500 or less, and from the viewpoint of stability of the metal carbide intermediate dispersion liquid of the present invention and cost reduction, the molar ratio is more preferably 0.01 or more and 100 or less, still more preferably 0.1 or more and 9 or less, and particularly preferably 0.1 or more and 6 or less. Typically, the molar ratio: the organic acid/(Nb + Ta) may be 0.005 or more, 0.5 or more, 1 or more, 2 or more, 3 or more, or 5 or more. On the other hand, the molar ratio: the organic acid/(Nb + Ta) may be 200 or less, 50 or less, 40 or less, 30 or less, 20 or less, 10 or less, 8 or less, or 5 or less.

Further, the metal carbide intermediate dispersion liquid of the present invention may contain water, an organic solvent, or a mixed solvent thereof as a solvent. Examples of the organic solvent include an alcohol solvent, a ketone solvent, an ether solvent, an ester solvent, an aromatic hydrocarbon solvent, and an aliphatic hydrocarbon solvent, and a solvent obtained by mixing such an organic solvent with pure water may be used. Examples of the alcohol solvent include alcohols having 5 or less carbon atoms (methanol, ethanol, n-propanol, isopropyl alcohol, butanol, ethylene glycol, and propylene glycol), a high boiling point solvent, and acetone. The solvent and water are preferably compatible with each other. Examples of the high boiling point solvent include a polyhydric alcohol-based solvent and a glycol-based solvent. It is preferable that the solvent contained in the metal carbide intermediate dispersion liquid of the present invention is water from the viewpoint that high dispersibility can be maintained.

The solvent may be one to which a resin such as a polyolefin-based compound or a polyvinyl-based compound is added. The resin to be added to the solvent may be an anionic water-soluble resin and/or a nonionic water-soluble resin.

As described above, the metal carbide intermediate dispersion liquid of the present invention contains a metal compound, an alkaline compound, hydrogen peroxide, and an organic acid, at least some of which presumably form a peroxo complex containing a metal element derived from the metal compound.

In the metal carbide intermediate dispersion liquid of the present invention, the particle diameter (D50) of particles in the metal carbide intermediate dispersion liquid as determined by particle diameter distribution measurement using a dynamic light scattering method is preferably 1,000 nm or less from the viewpoint of temporal stability, more preferably 500 nm or less, and particularly preferably 100 nm or less. Typically, the particle diameter (D50) may be 900 nm or less, 800 nm or less, 700 nm or less, 600 nm or less, 400 nm or less, 300 nm or less, 200 nm or less, 50 nm or less, 30 nm or less, 20 nm or less, 10 nm or less, 6 nm or less, 2 nm or less, 1 nm or less, or 0.6 nm or less. On the other hand, the particle diameter (D50) of particles in the metal carbide intermediate dispersion liquid of the present invention is preferably 1 nm or more, more preferably 2 nm or more, still more preferably 6 nm or more, and particularly preferably 10 nm or more, and further may be 100 nm or more, 200 nm or more, 300 nm or more, 400 nm or more, or 500 nm or more. Typically, the particle diameter (D50) of particles in the metal carbide intermediate dispersion liquid of the present invention is 10 nm or more and 800 nm or less.

Specifically, a method for evaluating the particle size distribution is performed in accordance with JIS Z 8828:2019 "Particle size analysis-Dynamic light scattering" using a zeta potential/particle size/molecular weight measurement system (ELSZ-2000 ZS, manufactured by Otsuka Electronics Co., Ltd.). In addition, if necessary, one diluted 1,000 times with pure water is used as a measurement sample, and in order to remove dust and the like in the measurement sample immediately before measurement, the measurement sample is filtered through a filter having a pore diameter of 11 μm, and an ultrasonic treatment is performed for 3 minutes with an ultrasonic cleaner (VS-100 III, manufactured by AS ONE Corporation). Further, the liquid temperature of the measurement sample was adjusted to 25°C. The particle diameter (D50)) of particles in the metal carbide intermediate dispersion liquid of the present invention refers to a median diameter (D50) that is a particle diameter indicating a 50% cumulative value of a cumulative distribution curve. In the present description, unless otherwise specified, the "particle diameter (D50)" includes all of the particle diameter (D50) of particles in the metal carbide intermediate dispersion liquid of the present invention adjusted to a liquid temperature of 25°C immediately after being formed, and the particle diameter (D50) of particles in the metal carbide intermediate dispersion liquid after being left to stand for 2 weeks or 3 weeks from the day on which the metal carbide intermediate dispersion liquid of the present invention is formed in an incubator set at room temperature of 25°C.

The metal carbide intermediate dispersion liquid of the present invention contains a metal compound, an alkaline compound, hydrogen peroxide, and an organic acid, in which a maximum value of a light transmittance of the metal carbide intermediate dispersion liquid in the wavelength region of 350 nm to 750 nm is 70% or more.

As described above, the metal carbide intermediate dispersion liquid of the present invention contains a metal compound, an alkaline compound, hydrogen peroxide, and an organic acid. As described above, the metal carbide intermediate dispersion liquid of the present invention may contain water, an organic solvent, or a mixed solvent thereof as a solvent.

It is preferable that the maximum value of the light transmittance of the metal carbide intermediate dispersion liquid of the present invention in the wavelength region of 350 nm to 750 nm is 70% or more from the viewpoint that the degree of dispersion is high and the uniformity of components in the liquid is excellent. The maximum value of the light transmittance in the wavelength region of 350 nm to 750 nm is more preferably 85% or more, still more preferably 90% or more, and most preferably 100%. Typically, the maximum value of the light transmittance may be 72% or more, 74% or more, 76% or more, 78% or more, 80% or more, 90% or more, 98% or more, or 99% or more.

The light transmittance of the metal carbide intermediate dispersion liquid of the present invention at any one or more wavelengths of 350 nm, 450 nm, 550 nm, 650 nm, and 750 nm is preferably 70% or more, more preferably 85% or more, still more preferably 90% or more, and most preferably 100%. Typically, the light transmittance at any one or more wavelengths of 350 nm, 450 nm, 550 nm, 650 nm, and 750 nm may be 72% or more, 74% or more, 76% or more, 78% or more, 80% or more, 90% or more, 98% or more, or 99% or more.

Further, the light transmittance of the metal carbide intermediate dispersion liquid of the present invention in the wavelength region of 350 nm to 750 nm is preferably 70% or more, more preferably 85% or more, still more preferably 90% or more, and most preferably 100%. Typically, the light transmittance in the wavelength region of 350 nm to 750 nm may be 72% or more, 74% or more, 76% or more, 78% or more, 80% or more, 90% or more, 98% or more, or 99% or more.

Note that the measurement value of the light transmittance described above may exceed 100% due to a measurement error or the like, but since the theoretical upper limit value is 100%, when the measurement value exceeds 100%, it is regarded as 100%. As described above, a liquid in a state in which the maximum value of the light transmittance of the metal carbide intermediate dispersion liquid of the present invention in the wavelength region of 350 nm to 750 nm is 70% or more is referred to as "metal carbide intermediate dispersion liquid" of the present invention. In the present description, unless otherwise specified, the "light transmittance" includes all of the light transmittance of the metal carbide intermediate dispersion liquid of the present invention adjusted to a liquid temperature of 25°C immediately after being formed, and the light transmittance of the metal carbide intermediate dispersion liquid after being left to stand for 2 weeks or 3 weeks from the day on which the metal carbide intermediate dispersion liquid of the present invention is formed in an incubator set at room temperature of 25°C.

Here, the light transmittance described above is measured for the metal carbide intermediate dispersion liquid of the present invention using a spectrophotometer according to the following transmittance measurement conditions.

=Light transmittance measurement conditions=

Measuring apparatus: ultraviolet-visible-near-infrared spectrophotometer model UH4150 (manufactured by Hitachi High-Tech Science Corporation)
· Measurement mode: wavelength scan
· Data mode: %T (transmittance)
· Measurement wavelength range: 200 nm to 2,000 nm · Scanning speed: 600 nm/min
· Sampling interval: 2 nm

Incidentally, the "dispersion liquid" in the present invention is not limited to one in which a solute is dispersed or mixed in a state of a single molecule in a solvent, and also includes an aggregate in which a plurality of molecules are attracted by intermolecular interaction, for example, one in which (1) a multimer molecule, (2) a solvate molecule, (3) a molecular cluster, (4) colloidal particles, or the like is dispersed in a solvent.

In addition, the metal carbide intermediate dispersion liquid of the present invention has a pH of 3.0 or more and 10.0 or less.

It is preferable that the pH of the metal carbide intermediate dispersion liquid of the present invention is 3.0 or more and 10.0 or less from the viewpoint that polyacid ions contained in the dispersion liquid are stabilized. The pH of the metal carbide intermediate dispersion liquid of the present invention is more preferably 4.0 or more and 7.0 or less, and still more preferably 4.7 or more and 6.5 or less. Typically, the pH may be 5.0 or more, 6.0 or more, or 6.5 or more. On the other hand, the pH may be 9.0 or less or 8.0 or less. In the present description, unless otherwise specified, the "pH" includes all of the pH of the metal carbide intermediate dispersion liquid of the present invention adjusted to a liquid temperature of 25°C immediately after being formed, and the pH of the metal carbide intermediate dispersion liquid after being left to stand for 2 weeks or 3 weeks from the day on which the metal carbide intermediate dispersion liquid of the present invention is formed in an incubator set at room temperature of 25°C.

Here, the pH of the metal carbide intermediate dispersion liquid of the present invention is measured after an electrode (standard ToupH electrode 9615S-10D, manufactured by HORIBA, Ltd.) of a pH meter (a glass electrode type hydrogen ion concentration indicator D-51, manufactured by HORIBA, Ltd.) is immersed in the metal carbide intermediate dispersion liquid of the present invention and it is checked that the liquid temperature is stabilized at 25°C.

Further, in the metal carbide intermediate dispersion liquid of the present invention, a molar ratio of the organic acid to the metal compound is more than 0 to 500, a molar ratio of the hydrogen peroxide to the metal compound is more than 0 to 10, and a molar ratio of the alkaline compound to the metal compound is more than 0 to 100.

In the metal carbide intermediate dispersion liquid of the present invention, it is preferable that a molar ratio of the organic acid to the metal compound is more than 0 to 500, a molar ratio of the hydrogen peroxide to the metal compound is more than 0 to 10, and a molar ratio of the alkaline compound to the metal compound is more than 0 to 100 from the viewpoint of stability and dispersibility of the metal carbide intermediate dispersion liquid of the present invention.

The molar ratio of the organic acid to the metal compound is preferably more than 0 to 500, more preferably 0.01 to 100, still more preferably 0.1 to 9, and particularly preferably 0.1 to 6. The molar ratio of hydrogen peroxide to the metal compound is preferably more than 0 to 10, more preferably 0.001 to 3, and still more preferably 0.01 to 1. The alkaline compound and the metal compound are preferably more than 0 to 100, more preferably 0.001 to 100, still more preferably 0.01 to 50, particularly preferably 0.1 to 30, and more particularly preferably 4 to 20.

Here, the molar ratio of the organic acid to the metal compound, the molar ratio of the hydrogen peroxide to the metal compound, and the molar ratio of the alkaline compound to the metal compound can be determined by calculating the metal compound content, the organic acid content, the hydrogen peroxide content, and the alkaline compound content by the following measurement method.

The metal compound content in the metal carbide intermediate dispersion liquid of the present invention can be calculated by appropriately diluting the dispersion liquid with dilute hydrochloric acid as necessary, and measuring the metal atom mass fraction in terms of metal atom in the metal compound in accordance with JIS K 0116:2014 using ICP emission spectrometry (AG-5110, manufactured by Agilent Technologies, Inc.).

Examples of the method for measuring the organic acid content in the metal carbide intermediate dispersion liquid of the present invention include gas chromatography (GC), liquid chromatography (LC), mass spectrometry (MS), gas chromatography-mass spectrometry (GC-MS), and liquid chromatography-mass spectrometry (LC-MS).

As for the hydrogen peroxide content in the metal carbide intermediate dispersion liquid of the present invention, the hydrogen peroxide content in the dispersion liquid can be checked by measuring the relative intensity of absorbance with respect to a standard solution of hydrogen peroxide using, for example, a standard addition method. Specifically, a wavelength region in which a change in absorbance associated with formation of a peroxo complex is observed is found from ultraviolet-visible absorption spectra of a standard solution containing a known concentration, for example, 1 mass% of hydrogen peroxide and a standard solution to which hydrogen peroxide is not added, and when the difference in absorbance between the standard solution to which hydrogen peroxide is not added and a sample having an unknown hydrogen peroxide concentration in the wavelength region is less than 1%, it can be verified that hydrogen peroxide is substantially not contained in the sample having an unknown hydrogen peroxide concentration. When hydrogen peroxide is contained in the dispersion liquid, hydrogen peroxide reacts with a polyacid of a metal element to form a peroxo complex, and thus it can be verified that hydrogen peroxide is not contained in the dispersion liquid by checking the difference in absorbance of the standard solution to which hydrogen peroxide is not added as described above. In addition to the standard addition method described above, for example, a commercially available hydrogen peroxide measurement kit may be used to qualitatively and quantitatively analyze hydrogen peroxide in the dispersion liquid by adding a reagent that causes a color reaction with hydrogen peroxide to the dispersion liquid and measuring the color development, or by adding a reagent that causes a fluorescence reaction with hydrogen peroxide to the dispersion liquid and measuring the light emission.

Examples of the method for measuring the content of the alkaline compound, for example, the ammonia content in the metal carbide intermediate dispersion liquid of the present invention include a method in which sodium hydroxide is added to the dispersion liquid to distill and separate ammonia, and the ammonia content is quantified with an ion meter, a method in which the $N_2$ content in a gasified sample is quantified with a thermal conductivity meter, and a Kjeldahl method. In particular, a method in which the ammonia content is quantified with an ion meter is preferable. Examples of the method for measuring the organic nitrogen compound content include gas chromatography (GC), ion chromatography, and gas chromatography-mass spectrometry (GC-MS). For example, the content of one or more types of organic nitrogen compounds selected from sodium hydroxide, potassium hydroxide, lithium hydroxide, and calcium hydroxide can be measured in accordance with JIS K 0116:2014 using ICP emission spectrometry.

In this manner, the molar ratio of the organic acid to the metal compound, the molar ratio of the hydrogen peroxide to the metal compound, and the molar ratio of the alkaline compound to the metal compound can be calculated from the calculated metal compound content, organic acid content, hydrogen peroxide content, and alkaline compound content.

Further, in the metal carbide intermediate dispersion liquid of the present invention, in the metal carbide intermediate dispersion liquid, the tantalum content in terms of Ta is 0.4 mass% or more, or the niobium content in terms of Nb is 0.35 mass% or more.

It is preferable that, in the metal carbide intermediate dispersion liquid of the present invention, the content of tantalum in terms of Ta is 0.4 mass% or more, or the content of niobium in terms of Nb is 0.35 mass% or more from the viewpoint that the film thickness of the metal carbide film at the time of film formation is increased. In addition, the tantalum content in terms of Ta in the metal carbide intermediate dispersion liquid of the present invention is more preferably 10 mass% or more, and still more preferably 20 mass% or more. In addition, the niobium content in terms of Nb in the metal carbide intermediate dispersion liquid of the present invention is more preferably 20 mass% or more, and still more preferably 30 mass% or more.

The tantalum content or the niobium content in the metal carbide intermediate dispersion liquid of the present invention can be calculated by measuring the Ta mass fraction in terms of Ta or the Nb mass fraction in terms of Nb in accordance with JIS K 0116:2014 using ICP emission spectrometry (AG-5110, manufactured by Agilent Technologies, Inc.).

Note that, in the present description, the expression "X to Y" (X and Y are arbitrary numbers) also includes the meaning of "preferably more than X" or "preferably less than Y" as well as the meaning of "X or more and Y or less" unless otherwise specified. In addition, the expression "X or more" (X is an arbitrary number) or "Y or less" (Y is an arbitrary number) also includes the intention of "preferably more than X" or "preferably less than Y".

Advantageous Effects of Invention

The method for producing a metal carbide of the present invention enables the production of a metal carbide powder which is in an ultrafine particle form and exhibits high fluidity. In addition, the metal carbide of the present invention exhibits high fluidity even though being in an ultrafine particle form. Further, the metal carbide intermediate dispersion liquid of the present invention is a dispersion liquid, in which the dispersibility is high and a precipitate is not deposited even after a lapse of a long period of time.

**Brief Description of Drawings**

Fig. 1 is a list of physical property values of metal carbide intermediate dispersion liquids according to Examples 3 to 10 and Comparative Examples 8 to 10.
Fig. 2 is a list of measurement results of metal carbide intermediate dispersion liquids according to Examples 3 to 10 and Comparative Examples 8 to 10.

**Description of Embodiments**

Hereinafter, the metal carbide of the embodiment according to the present invention will be further described with reference to Examples 1 and 2 and Comparative Examples 1 to 7 below. However, the following examples do not limit the present invention.

**(Example 1)**

A first mixed liquid was obtained by stirring and mixing 200 g of tantalum hydroxide and 92 g of 25 mass% ammonia water for 10 minutes. Thereafter, 220 g of 35 mass% hydrogen peroxide water was further added to the first mixed liquid, followed by stirring for 10 minutes to obtain a second mixed liquid. Then, 79 g of citric acid was added to the second mixed liquid, followed by stirring for 10 minutes to obtain a peroxo complex aqueous dispersion liquid according to Example 1 containing tantalum being a metal carbide precursor according to Example 1.

The obtained peroxo complex aqueous dispersion liquid according to Example 1 was a transparent solution without precipitation immediately after production thereof, and was a transparent solution without precipitation also after 7 days from production. The concentration in terms of $Ta_2O_5$ of the peroxo complex dispersion liquid according to Example 1 after 7 days from production was 175 g/L. Further, the average particle diameter as measured by a dynamic light scattering method of the peroxo complex aqueous dispersion liquid according to Example 1 after 7 days from production was 625.2 nm.

A metal carbide in a powder form and a metal carbide in a film form were formed from the peroxo complex aqueous dispersion liquid according to Example 1.

First, the peroxo complex aqueous dispersion liquid according to Example 1 was placed in a stationary furnace and heated and dried at a heating temperature of 110°C for 12 hours to obtain a peroxo complex powder containing tantalum. Further, the peroxo complex powder containing tantalum was packed in a carbon crucible, and then placed in a high-temperature vacuum furnace, and fired at a firing temperature of 1,500°C for 1 hour in the air to obtain tantalum carbide. Then, the obtained tantalum carbide was crushed using a ball mill or the like to obtain a tantalum carbide powder being a metal carbide in a powder form according to Example 1. It was verified that the tantalum carbide powder according to Example 1 is tantalum carbide (TaC, ICDD card No. 00-019-1292) from the results of XRD measurement obtained according to the above-described X-ray diffraction measurement conditions and X-ray diffraction analysis conditions because a peak was observed in the range of $2\theta = 33°$ to $90°$.

Subsequently, the peroxo complex aqueous dispersion liquid according to Example 1 was applied onto a carbon black base material, and the carbon black base material with the peroxo complex aqueous dispersion liquid according to Example 1 applied thereto was placed in a stationary furnace and dried at a heating temperature of 110°C for 10 minutes. Then, the dried carbon black base material with the peroxo complex aqueous dispersion liquid according to Example 1 applied thereto was placed in a high-temperature vacuum furnace, and fired at a firing temperature of 1,600°C for 60 minutes in the air to obtain a tantalum carbide film being a metal carbide in a film form according to Example 1. It was verified that the tantalum carbide film according to Example 1 is a tantalum carbide (TaC, ICDD card No. 00-019-1292) single phase from the results of XRD measurement obtained according to the above-described X-ray diffraction measurement conditions and X-ray diffraction analysis conditions, according to the above-described X-ray diffraction measurement conditions and X-ray diffraction analysis conditions because a peak was observed in the range of $2\theta = 33$ to $90°$.

**(Example 2)**

A mixed liquid was obtained by mixing 100 g of niobium hydroxide, 153 g of 25 mass% ammonia water, and 365 g of 35 mass% hydrogen peroxide water, followed by stirring for 10 minutes. Thereafter, 87.6 g of citric acid was added to the mixed liquid, followed by stirring for 10 minutes to obtain a peroxo complex dispersion liquid containing niobium being a metal carbide precursor according to Example 2.

The obtained peroxo complex dispersion liquid according to Example 2 was a transparent solution without precipitation immediately after production thereof, and was a transparent solution without precipitation also after 7 days from production. The concentration in terms of $Nb_2O_5$ of the peroxo complex dispersion liquid according to Example 2 after 7 days from production was 133 g/L. Further, the average particle diameter as measured by a dynamic light scattering method of the peroxo complex dispersion liquid according to Example 2 after 7 days from production was 540 nm.

A metal carbide in a powder form and a metal carbide in a film form were formed from the peroxo complex aqueous dispersion liquid according to Example 2.

First, the peroxo complex dispersion liquid according to Example 2 was placed in a stationary furnace and heated and dried at a heating temperature of 110°C for 12 hours to obtain a peroxo complex powder containing niobium. Further, the peroxo complex powder containing niobium was packed in a carbon crucible, and then placed in a high-temperature vacuum furnace, and fired at a firing temperature of 1,500°C for 1 hour in the air to obtain niobium carbide. Then, the obtained niobium carbide was crushed using a ball mill or the like to obtain a niobium carbide powder being a metal carbide according to Example 2. It was verified that the niobium carbide powder according to Example 2 is niobium carbide (TaNb, PDF card No. 01-076-7071) from the results of XRD measurement obtained according to the above-described X-ray diffraction measurement conditions and X-ray diffraction analysis conditions because a peak was observed in the range of $2\theta = 33°$ to $90°$.

Subsequently, the peroxo complex aqueous dispersion liquid according to Example 2 was applied onto a carbon black base material, and the carbon black base material with the peroxo complex aqueous dispersion liquid according to Example 2 applied thereto was placed in a stationary furnace and dried at a heating temperature of 110°C for 10 minutes. Then, the dried carbon black base material with the peroxo complex aqueous dispersion liquid according to Example 1 applied thereto was placed in a high-temperature vacuum furnace, and fired at a firing temperature of 1,600°C for 60 minutes in the air to obtain a niobium carbide film being a metal carbide in a film form according to Example 2. It was verified that the niobium carbide film according to Example 2 is a niobium carbide (TaNb, PDF card No. 01-076-7071) single phase from the results of XRD measurement obtained according to the above-described X-ray diffraction measurement conditions and X-ray diffraction analysis conditions because a peak was observed in the range of $2\theta = 33°$ to $90°$.

**(Comparative Example 1)**

A mixed powder was obtained by weighing 120 kg of tantalum oxide and 22 kg of carbon black on a platform scale, followed by stirring and mixing for 5 minutes with a vertical mixer.

This mixed powder was packed in carbon containers (2 kg/container), and fed into a resistance heating hydrogen furnace at a rate of 2 containers per 3 hours, and fired at a temperature of 1,700°C for 14 hours to perform primary carbonization to obtain a primary carbide.

This primary carbide was packed in a carbon crucible (100 kg/crucible), and charged into a high-frequency induction heating vacuum furnace, and fired at a temperature of 1,800°C for 5 hours to obtain a secondary carbide.

The secondary carbide cooled to room temperature in the high-frequency induction heating vacuum furnace was taken out from the carbon crucible, and coarsely pulverized into clumps having a diameter of 2 cm or less using a jaw crusher.

After coarse pulverization, pulverization was performed for 20 hours using a ball mill filled with 20 to 50 mm φ iron balls to finely pulverize the coarsely pulverized secondary carbide.

Then, the finely pulverized secondary carbide was classified by a vibration sieve, and the obtained undersize (on the fine particle side) was collected to obtain tantalum carbide in a powder form being a metal carbide according to Comparative Example 1.

**(Comparative Example 2)**

In Comparative Example 2, tantalum carbide in a powder form being a metal carbide according to Comparative Example 2 was obtained by performing a production method similar to that in Comparative Example 1 except that the coarsely pulverized secondary carbide was finely pulverized using a jet mill being an airflow pulverizer set to a wind speed of 2.5 $m^3$/min and a sample feed rate of 10 kg/hr.

**(Comparative Example 3)**

In Comparative Example 3, niobium carbide in a powder form being a metal carbide according to Comparative Example 3 was obtained by performing a production method similar to that in Comparative Example 1 except that the tantalum oxide was changed to niobium oxide and the addition amount of carbon black was set to 13 kg.

**(Comparative Example 4)**

A precipitate of tantalic acid hydrate $Ta_2O_5 \cdot nH_2O$ was obtained by dissolving 50 g of tantalum pentachloride in a small amount of methanol, adding water thereto, and further adding 25 mass% ammonia water thereto. After the precipitate was washed with water to remove chloride ions, 12.57 g of citric acid and 46 g of 25 mass% ammonia water were added thereto and mixed therewith, and then 109 g of 35 mass% hydrogen peroxide water was added thereto, followed by stirring for 10 minutes to obtain a peroxo complex dispersion liquid containing tantalum being a metal carbide precursor according to Comparative Example 4.

The obtained peroxo complex dispersion liquid according to Comparative Example 4 was a transparent solution with a white precipitate immediately after production, and was a transparent solution with a white precipitate also after 7 days from production. The concentration in terms of $Ta_2O_5$ of a dispersion liquid obtained by separating the white precipitate with a centrifuge from the peroxo complex dispersion liquid according to Comparative Example 4 after 7 days from production was 39 g/L. Further, in the peroxo complex dispersion liquid according to Comparative Example 4 after 7 days from production, a white precipitate occurred, and it was difficult to measure the average particle diameter by a dynamic light scattering method.

Then, the peroxo complex dispersion liquid according to Comparative Example 4 was placed in a stationary furnace in the same manner as in Example 1, and heated and dried at a heating temperature of 110°C for 12 hours to obtain a dry powder. The obtained dried powder was packed in a carbon crucible, and then placed in a high-temperature vacuum furnace, and fired at a firing temperature of 1,500°C for 1 hour in the air to obtain a fired powder. When the obtained fired powder was checked by XRD measurement performed under the X-ray diffraction measurement conditions and the X-ray diffraction analysis conditions described above, no peak was observed in the range of $2\theta = 33°$ to $90°$, and it was verified that the carbonization reaction did not proceed.

**(Comparative Example 5)**

In Comparative Example 5, a peroxo complex dispersion liquid according to Comparative Example 5 was obtained by performing a production method similar to that in Comparative Example 4 except that the citric acid in Comparative Example 4 was changed to 37.4 g of lactic acid.

The obtained peroxo complex dispersion liquid according to Comparative Example 5 was a transparent solution with a white precipitate immediately after production, and was a transparent solution with a white precipitate also after 7 days from production. The concentration in terms of $Ta_2O_5$ of a dispersion liquid obtained by separating the white precipitate with a centrifuge from the peroxo complex dispersion liquid according to Comparative Example 5 after 7 days from production was 2 g/L. Further, in the peroxo complex dispersion liquid according to Comparative Example 5 after 7 days from production, a white precipitate occurred, and it was difficult to measure the average particle diameter by a dynamic light scattering method.

Then, the peroxo complex dispersion liquid according to Comparative Example 5 was placed in a stationary furnace in the same manner as in Example 1, and heated and dried at a heating temperature of 110°C for 12 hours to obtain a dry powder. The obtained dried powder was packed in a carbon crucible, and then placed in a high-temperature vacuum furnace, and fired at a firing temperature of 1,500°C for 1 hour in the air to obtain a fired powder. When the obtained fired powder was checked by XRD measurement performed under the X-ray diffraction measurement conditions and the X-ray diffraction analysis conditions described above, no peak was observed in the range of $2\theta = 33°$ to $90°$, and it was verified that the carbonization reaction did not proceed.

**(Comparative Example 6)**

In Comparative Example 6, a peroxo complex dispersion liquid according to Comparative Example 6 was obtained by performing a production method similar to that in Comparative Example 4 except that the citric acid in Comparative Example 4 was changed to 92.3 g of tartaric acid.

The obtained peroxo complex dispersion liquid according to Comparative Example 6 was a transparent solution with a white precipitate immediately after production, and was a transparent solution with a white precipitate also after 7 days from production. The concentration in terms of $Ta_2O_5$ of a dispersion liquid obtained by separating the white precipitate with a centrifuge from the peroxo complex dispersion liquid according to Comparative Example 6 after 7 days from production was < 1 g/L. Further, in the peroxo complex dispersion liquid according to Comparative Example 6 after 7 days from production, a white precipitate occurred, and it was difficult to measure the average particle diameter by a dynamic light scattering method.

Then, the peroxo complex dispersion liquid according to Comparative Example 6 was placed in a stationary furnace in the same manner as in Example 1, and heated and dried at a heating temperature of 110°C for 12 hours to obtain a dry powder. The obtained dried powder was packed in a carbon crucible, and then placed in a high-temperature vacuum furnace, and fired at a firing temperature of 1,500°C for 1 hour in the air to obtain a fired powder. When the obtained fired powder was checked by XRD measurement performed under the X-ray diffraction measurement conditions and the X-ray diffraction analysis conditions described above, no peak was observed in the range of $2\theta = 33°$ to $90°$, and it was verified that the carbonization reaction did not proceed.

**(Comparative Example 7)**

In Comparative Example 7, a peroxo complex dispersion liquid according to Comparative Example 7 was obtained by performing a production method similar to that in Comparative Example 4 except that the citric acid in Comparative Example 4 was changed to 120.2 g of EDTA (ethylenediaminetetraacetic acid).

The obtained peroxo complex dispersion liquid according to Comparative Example 7 was a transparent solution with a white precipitate immediately after production, and was a transparent solution with a white precipitate also after 7 days from production. The concentration in terms of $Ta_2O_5$ of a dispersion liquid obtained by separating the white precipitate with a centrifuge from the peroxo complex dispersion liquid according to Comparative Example 7 after 7 days from production was < 1 g/L. Further, in the peroxo complex dispersion liquid according to Comparative Example 7 after 7 days from production, a white precipitate occurred, and it was difficult to measure the average particle diameter by a dynamic light scattering method.

Then, the peroxo complex dispersion liquid according to Comparative Example 7 was placed in a stationary furnace in the same manner as in Example 1, and heated and dried at a heating temperature of 110°C for 12 hours to obtain a dry powder. The obtained dried powder was packed in a carbon crucible, and then placed in a high-temperature vacuum furnace, and fired at a firing temperature of 1,500°C for 1 hour in the air to obtain a fired powder. When the obtained fired powder was checked by XRD measurement performed under the X-ray diffraction measurement conditions and the X-ray diffraction analysis conditions described above, no peak was observed in the range of $2\theta = 33°$ to $90°$, and it was verified that the carbonization reaction did not proceed.

Next, the metal carbide intermediate dispersion liquid according to the embodiment of the present invention will be further described with reference to the following Examples 3 to 10 and Comparative Examples 8 to 10. However, the following examples do not limit the present invention.

**(Example 3)**

A first mixed liquid was obtained by stirring and mixing 200 g of tantalum hydroxide and 92 g of 25 mass% ammonia water for 10 minutes. Thereafter, 220 g of 35 mass% hydrogen peroxide water was further added to the first mixed liquid, followed by stirring for 10 minutes to obtain a second mixed liquid. Then, 79 g of citric acid was added to the second mixed liquid, followed by stirring for 10 minutes to obtain a metal carbide intermediate dispersion liquid according to Example 3. The metal carbide intermediate dispersion liquid according to Example 3 is the same dispersion liquid as the peroxo complex aqueous dispersion liquid according to Example 1 containing tantalum being the metal carbide precursor according to Example 1.

The content in terms of Ta in the obtained metal carbide intermediate dispersion liquid according to Example 3 was 0.050 mol (the content in terms of Ta was 18.800 mass%). The hydrogen peroxide content was 0.009 mol (0.3 mass%), and the ammonia content was 0.2 mol (3.6 mass%). Further, the organic acid (citric acid) content was 0.07 mol (14 mass%). The balance was water.

**(Example 4)**

A mixed liquid was obtained by mixing 200 g of niobium hydroxide, 100 g of 25 mass% ammonia water, and 235 g of 35 mass% hydrogen peroxide water, followed by stirring for 10 minutes. Thereafter, 75 g of citric acid was added to the mixed liquid, followed by stirring for 10 minutes to obtain a metal carbide intermediate dispersion liquid according to Example 4.

The content in terms of Nb in the obtained metal carbide intermediate dispersion liquid according to Example 4 was 0.020 mol (the content in terms of Nb was 3.495 mass%). The hydrogen peroxide content was 0.009 mol (0.3 mass%), and the ammonia content was 0.2 mol (3.6 mass%). Further, the organic acid (citric acid) content was 0.07 mol (14 mass%). The balance was water.

**(Example 5)**

In Example 5, a metal carbide intermediate dispersion liquid according to Example 5 was obtained by adding 79 g of citric acid and 5 g of lactic acid to a second mixed liquid obtained by a production method similar to that in Example 3, followed by stirring for 10 minutes.

The content in terms of Ta in the obtained metal carbide intermediate dispersion liquid according to Example 5 was 0.010 mol (the content in terms of Ta was 4.095 mass%). The hydrogen peroxide content was 0.009 mol (0.3 mass%), and the ammonia content was 0.2 mol (3.6 mass%). Further, the total content of the organic acids (citric acid and lactic acid) was 0.08 mol (15 mass%), and the breakdown of the total content was as follows: a citric acid content: 0.07 mol (14 mass%) and a lactic acid content: 0.010 mol (1 mass%). The balance was water.

**(Example 6)**

In Example 6, a metal carbide intermediate dispersion liquid according to Example 6 was obtained by adding 58 g of tartaric acid to a second mixed liquid obtained by a production method similar to that in Example 3, followed by stirring for 10 minutes.

The content in terms of Ta in the obtained metal carbide intermediate dispersion liquid according to Example 6 was 0.010 mol (the content in terms of Ta was 4.095 mass%). The hydrogen peroxide content was 0.009 mol (0.3 mass%), and the ammonia content was 0.2 mol (3.6 mass%). Further, the organic acid (tartaric acid) content was 0.09 mol (14 mass%). The balance was water.

**(Example 7)**

A mixed liquid was obtained by mixing 200 g of niobium hydroxide, 100 g of 25 mass% ammonia water, and 235 g of 35 mass% hydrogen peroxide water, followed by stirring for 10 minutes. Thereafter, 75 g of citric acid and 5 g of lactic acid were added to the mixed liquid, followed by stirring for 10 minutes to obtain a metal carbide intermediate dispersion liquid according to Example 7.

The content in terms of Nb in the obtained metal carbide intermediate dispersion liquid according to Example 7 was 0.015 mol (the content in terms of Nb was 3.495 mass%). The hydrogen peroxide content was 0.009 mol (0.3 mass%), and the ammonia content was 0.2 mol (3.6 mass%). Further, the total content of the organic acids (citric acid and lactic acid) was 0.08 mol (15 mass%), and the breakdown of the total content was as follows: a citric acid content: 0.07 mol (14 mass%) and a lactic acid content: 0.010 mol (1 mass%). The balance was water.

**(Example 8)**

In Example 8, a metal carbide intermediate dispersion liquid according to Example 8 was obtained by adding 75 g of citric acid and 5 g of tartaric acid to a mixed liquid obtained by a production method similar to that in Example 7, followed by stirring for 10 minutes.

The content in terms of Nb in the obtained metal carbide intermediate dispersion liquid according to Example 8 was 0.015 mol (the content in terms of Nb was 3.495 mass%). The hydrogen peroxide content was 0.009 mol (0.3 mass%), and the ammonia content was 0.2 mol (3.6 mass%). Further, the total content of the organic acids (citric acid and tartaric acid) was 0.076 mol (15 mass%), and the breakdown of the total content was as follows: a citric acid content: 0.07 mol (14 mass%) and a tartaric acid content: 0.06 mol (1 mass%). The balance was water.

**(Example 9)**

A first mixed liquid was obtained by stirring and mixing 100 g of tantalum hydroxide, 100 g of niobium hydroxide, and 100 g of 25 mass% ammonia water for 10 minutes. Thereafter, 235 g of 35 mass% hydrogen peroxide water was further added to the first mixed liquid, followed by stirring for 10 minutes to obtain a second mixed liquid. Then, 79 g of citric acid was added to the second mixed liquid, followed by stirring for 10 minutes to obtain a metal carbide intermediate dispersion liquid according to Example 9.

The total content in terms of Nb and Ta in the obtained metal carbide intermediate dispersion liquid according to Example 9 was 0.025 mol (the total content in terms of Nb and Ta was 7.590 mass%), and the breakdown of the total content was as follows: a content in terms of Nb: 0.015 mol (a content in terms of Nb: 3.495 mass%) and a content in terms of Ta: 0.010 mol (a content in terms of Ta: 4.095 mass%). The hydrogen peroxide content was 0.009 mol (0.3 mass%), and the ammonia content was 0.2 mol (3.6 mass%). Further, the organic acid (citric acid) content was 0.07 mol (14 mass%). The balance was water.

**(Example 10)**

In Example 10, a metal carbide intermediate dispersion liquid according to Example 10 was obtained by adding 79 g of citric acid, 5 g of tartaric acid, and 5 g of lactic acid to a second mixed liquid obtained by a production method similar to that in Example 9, followed by stirring for 10 minutes.

The total content in terms of Nb and Ta in the obtained metal carbide intermediate dispersion liquid according to Example 10 was 0.025 mol (the total content in terms of Nb and Ta was 7.590 mass%), and the breakdown of the total content was as follows: a content in terms of Nb: 0.015 mol (a content in terms of Nb: 3.495 mass%) and a content in terms of Ta: 0.010 mol (a content in terms of Ta: 4.05 mass%). The hydrogen peroxide content was 0.009 mol (0.3 mass%), and the ammonia content was 0.2 mol (3.6 mass%). Further, the total content of the organic acids (citric acid, lactic acid, and tartaric acid) was 0.086 mol (16 mass%), and the breakdown of the total content was as follows: a citric acid content: 0.07 mol (14 mass%), a lactic acid content: 0.010 mol (1 mass%), and a tartaric acid content: 0.06 mol (1 mass%). The balance was water.

**(Comparative Example 8)**

A precipitate of tantalic acid hydrate $Ta_2O_5 \cdot nH_2O$ was obtained by dissolving 50 g of tantalum pentachloride in a small amount of methanol, adding water thereto, and further adding 25 mass% ammonia water thereto. After the precipitate was washed with water to remove chloride ions, 12.57 g of citric acid and 46 g of 25 mass% ammonia water were added thereto and mixed therewith, and then 109 g of 35 mass% hydrogen peroxide water was added thereto, followed by stirring for 10 minutes to obtain a metal carbide intermediate dispersion liquid according to Comparative Example 8. The metal carbide intermediate dispersion liquid according to Comparative Example 8 is the same dispersion liquid as the peroxo complex dispersion liquid according to Comparative Example 4.

The content in terms of Ta in the obtained metal carbide intermediate dispersion liquid according to Comparative Example 8 was 0.009 mol (the content in terms of Ta was 3.276 mass%). The hydrogen peroxide content was 0.009 mol (0.3 mass%). Further, the organic acid (citric acid) content was 0.07 mol (14 mass%). The balance was water.

**(Comparative Example 9)**

In Comparative Example 9, a metal carbide intermediate dispersion liquid according to Comparative Example 9 was obtained by performing a production method similar to that in Comparative Example 8 except that the citric acid in Comparative Example 8 was changed to 37.4 g of lactic acid. The metal carbide intermediate dispersion liquid according to Comparative Example 9 is the same dispersion liquid as the peroxo complex dispersion liquid according to Comparative Example 5.

The content in terms of Ta in the obtained metal carbide intermediate dispersion liquid according to Comparative Example 9 was 0.009 mol (the content in terms of Ta was 0.164 mass%). The hydrogen peroxide content was 0.009 mol (0.3 mass%). Further, the organic acid (lactic acid) content was 0.2 mol (15 mass%). The balance was water.

**(Comparative Example 10)**

In Comparative Example 10, a metal carbide intermediate dispersion liquid according to Comparative Example 10 was obtained by performing a production method similar to that in Comparative Example 8 except that the citric acid in Comparative Example 8 was changed to 92.3 g of tartaric acid. The metal carbide intermediate dispersion liquid according to Comparative Example 10 is the same dispersion liquid as the peroxo complex dispersion liquid according to Comparative Example 6.

The content in terms of Ta in the obtained metal carbide intermediate dispersion liquid according to Comparative Example 10 was 0.001 mol (the content in terms of Ta was 0.082 mass%). The hydrogen peroxide content was 0.009 mol (0.3 mass%. Further, the organic acid (tartaric acid) content was 0.1 mol (15 mass%). The balance was water.

Then, the following physical property values were measured for the metal carbides according to Examples 1 and 2 and Comparative Examples 1 to 3. Hereinafter, the measured physical property values and the method for measuring the physical property values are shown, and the measurement results are shown in Table 1. The fired powders according to Comparative Examples 4 to 7 were not a carbide as a result of XRD measurement, and therefore the measurement of the following physical property values was not performed.

<Elemental analysis>

A sample was appropriately diluted with hydrofluoric acid and nitric acid as necessary, and the Ta mass fraction in terms of Ta and the Nb mass fraction in terms of Nb were measured by ICP emission spectrometry (AG-5110, manufactured by Agilent Technologies, Inc.).

<Specific surface area>

The specific surface area of a sample of the metal carbide in a powder form according to each of Examples 1 and 2 and Comparative Examples 1 to 3 was measured by a BET method in accordance with JIS Z 8830 using a fully automatic specific surface area measuring apparatus (Macsorb HM model-1230).

<Primary particle diameter>

The primary particle diameter was calculated by substituting the above-described specific surface area of a sample of the metal carbide in a powder form according to each of Examples 1 and 2 and Comparative Examples 1 to 3 and a carbide density (for example, the tantalum carbide density is 13.9 [g/cm$^3$] and the niobium carbide density is 8.57 [g/cm$^3$]) into the above-described formula (1).

<Circularity>

SEM images of the primary particles of a sample of the metal carbide in a powder form according to each of Examples 1 and 2 and Comparative Examples 1 to 3 were measured using a scanning electron microscope (SEM) (S-4800, manufactured by Hitachi High-Technologies Corporation) at a magnification of 10,000 times or more and 100,000 times or less at which the primary particles can be measured. Further, the "major axis" and "minor axis" of 20 randomly extracted particles are measured using ImageJ which is image analysis software. The circularity was calculated from the measured "major axis" and "minor axis", and the arithmetic average value of the circularity of a plurality of particles was defined as "circularity".

<Measurement of chlorine content>

An appropriate amount of a sample of the metal carbide in a powder form according to each of Examples 1 and 2 and Comparative Examples 1 to 3 was collected on a ceramic board, the sample was heated by combustion ion chromatography (AQF-2100H, manufactured by Nitto Seiko Analytech Co., Ltd.) in an argon (Ar) atmosphere at 1,000°C for 10 minutes, and the amount of generated chlorine was measured to determine the chlorine content in the metal carbide powder.

<Measurement of nitrogen content>

An appropriate amount of a sample of the metal carbide in a powder form according to each of Examples 1 and 2 and Comparative Examples 1 to 3 was enclosed in a Ni capsule, and the nitrogen content in each metal carbide powder was determined by a thermal conductivity method using an oxygen/nitrogen analyzer (ON836, manufactured by LECO CORPORATION).

<Fluidity test 1>

In an A.B.D powder characteristic measuring instrument manufactured by TSUTSUI RIKAGAKU KIKAI CO., LTD. with a filter having a pore diameter of 850 $\mu$m set, 10 g of the powder sample of the metal carbide in a powder form according to each of Examples 1 and 2 and Comparative Examples 1 to 3 was put and the filter was vibrated for 1 minute to recover the powder sample that passed through the filter. Then, the recovery amount of the powder sample was measured, and the recovery rate was calculated from recovery rate = recovery amount (g)/10 g $\times$ 100. The supply adjusting dial for adjusting the vibration of the filter was set to "8".

<Fluidity test 2>

The pore diameter of the filter to be set in the A. B.D powder characteristic measuring instrument manufactured by TSUTSUI RIKAGAKU KIKAI CO., LTD. was changed to 1,000 $\mu$m, and measurement was performed in the same manner as in the fluidity test 1, and the recovery rate was calculated.

<Evaluation of mixability>

A mixed sample (10 g in total) obtained by weighing a metal carbide in a powder form according to each of Examples 1 and 2 and Comparative Examples 1 to 3 and tungsten carbide (manufactured by JAPAN NEW METALS CO., LTD., particle diameter 0.8 $\mu$m) so that the molar ratio of both was 1 : 1 was put in a 100 ml PP wide-mouth bottle, and stirred and mixed for 1 minute using a paint shaker (frequency: 50 Hz). Then, the mixed sample stirred and mixed was sampled at five points using a spatula, and the mass fraction of Ta or Nb in each sample was analyzed. One in which the difference between the maximum value and the minimum value of the Ta or Nb analytical value among the five points after stirring and mixing for 1 minute was 0.5 mass% or less was evaluated as "○" as being excellent in mixability, and one in which the difference between the maximum value and the minimum value of the Ta or Nb analytical value among the five points after stirring and mixing for 1 minute was more than 0.5 mass% was evaluated as "×" as being poor in mixability.

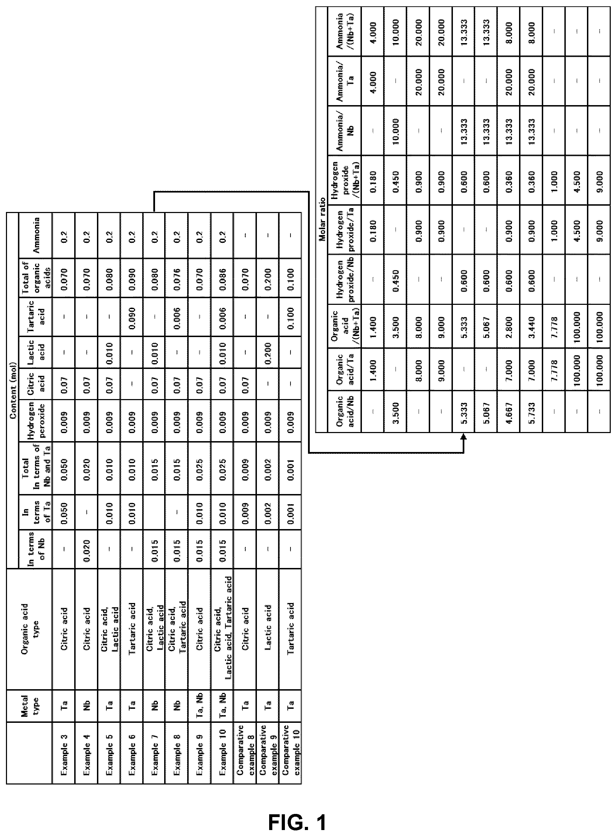

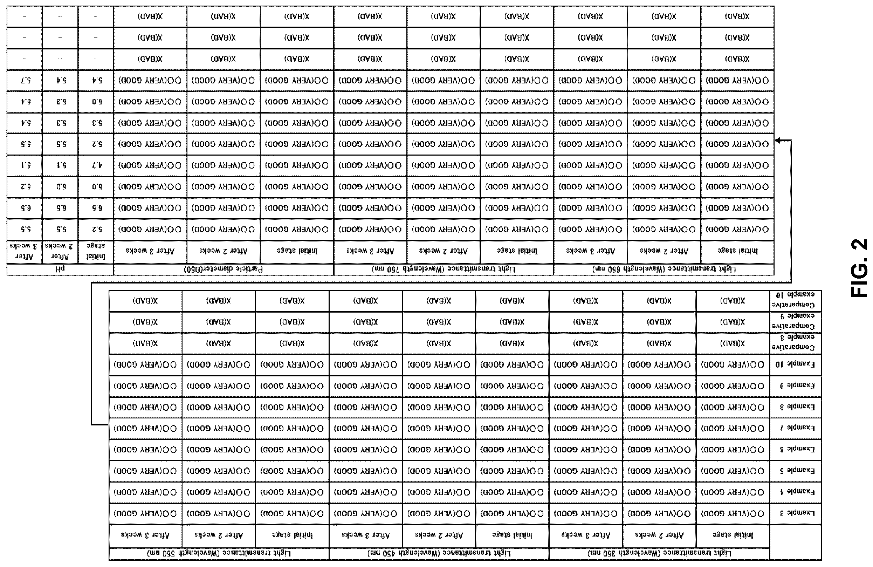

The following physical property values were measured for the metal carbide intermediate dispersion liquids according to Examples 3 to 10 and Comparative Examples 8 to 10. Hereinafter, the measured physical property values and the method for measuring the physical property values are shown, and the measurement results are shown in Figs 1 and 2.

<Particle size distribution measurement (dynamic light scattering method)>

The particle size distribution was evaluated by a dynamic light scattering method in accordance with JIS Z 8828:2019 using a zeta potential/particle size/molecular weight measurement system (ELSZ-2000, manufactured by Otsuka Electronics Co., Ltd.). In order to remove dust and the like in the metal carbide intermediate dispersion liquid according to each of Examples 3 to 10 and Comparative Examples 8 to 10 to be measured immediately before measurement, the dispersion liquid was filtered through a filter having a pore diameter of 1 $\mu$m to perform filtering. Further, D50 represents a particle diameter at which 50% is reached in terms of volume fraction. Then, when the measured particle diameter (D50) was 1 nm or more and 500 nm or less, it was evaluated as "○○ (VERY GOOD)", when the particle diameter (D50) was more than 500 nm and 1,000 nm or less, it was evaluated as "○ (GOOD)", and when the particle diameter (D50) was more than 1,000 nm, it was evaluated as "× (BAD)". The "INITIAL STAGE" in Fig. 2 refers to the metal carbide intermediate dispersion liquid according to each of Examples 3 to 10 and Comparative Examples 8 to 10 immediately after being formed. In addition, "AFTER 2 WEEKS" or "AFTER 3 WEEKS" in Fig. 2 refers to a metal carbide intermediate dispersion liquid after being left to stand for 2 weeks or 3 weeks from the day on which the metal carbide intermediate dispersion liquid according to each of Examples 3 to 10 and Comparative Examples 8 to 10 was formed in an incubator set at room temperature of 25°C. Since the metal carbide intermediate dispersion liquid according to each of Comparative Examples 8 to 10 was a suspension solution, the particle diameter (D50) was not measurable.

<Measurement of light transmittance>

In a glass cell, 3 ml of the metal carbide intermediate dispersion liquid according to each of Examples 3 to 10 and Comparative Examples 8 to 10 was placed, and the light transmittance in the wavelength region of 350 nm to 750 nm (specifically, light transmittance at wavelengths of 350 nm, 450 nm, 550 nm, 650 nm, and 750 nm) of the metal carbide intermediate dispersion liquid according to each of Examples 3 to 10 and Comparative Examples 8 to 10 was measured according to the light transmittance measurement conditions described above using a spectrophotometer. When the measured light transmittance was 85% or more and 100%, it was evaluated as "○○ (VERY GOOD)", when the light transmittance was 70% or more and less than 85%, it was evaluated as "○ (GOOD)", and when the light transmittance was less than 70%, it was evaluated as "× (BAD)". When the light transmittance was more than 100%, the light transmittance was regarded as 100%. The "INITIAL STAGE" in Fig. 2 refers to the metal carbide intermediate dispersion liquid according to each of Examples 3 to 10 and Comparative Examples 8 to 10 immediately after being formed. In addition, "AFTER 2 WEEKS" or "AFTER 3 WEEKS" in Fig. 2 refers to a metal carbide intermediate dispersion liquid after being left to stand for 2 weeks or 3 weeks from the day on which the metal carbide intermediate dispersion liquid according to each of Examples 3 to 10 and Comparative Examples 8 to 10 was formed in an incubator set at room temperature of 25°C. Since the metal carbide intermediate dispersion liquid according to each of Comparative Examples 8 to 10 was a suspension solution, the particle diameter (D50) was not measurable.

<Measurement of pH>

The pH was measured after an electrode (standard ToupH electrode 9615S-10D, manufactured by HORIBA, Ltd.) of a pH meter (a glass electrode type hydrogen ion concentration indicator D-51, manufactured by HORIBA, Ltd.) was immersed in the metal carbide intermediate dispersion liquid according to each of Examples 3 to 10 and Comparative Examples 8 to 10 and it was checked that the liquid temperature was stabilized at 25°C. The "INITIAL STAGE" in Fig. 2 refers to the metal carbide intermediate dispersion liquid according to each of Examples 3 to 10 and Comparative Examples 8 to 10 immediately after being formed. In addition, "AFTER 2 WEEKS" or "AFTER 3 WEEKS" in Fig. 2 refers to a metal carbide intermediate dispersion liquid after being left to stand for 2 weeks or 3 weeks from the day on which the metal carbide intermediate dispersion liquid according to each of Examples 3 to 10 and Comparative Examples 8 to 10 was formed in an incubator set at room temperature of 25°C.

[Table 1]

|  | Metal carbide | Specific surface area $(m^2/g)$ | Primary particle diameter $(\mu m)$ | Chlorine content (ppm) | Nitrogen content (ppm) | Circularity | Fluidity 1 (recovery rate%) | Fluidity 2 (recovery rate%) |
|---|---|---|---|---|---|---|---|---|
| Example 1 | TaC | 5.41 | 0.080 | <25 | 360 | 0.919 | 99.0 | 99.2 |
| Example 2 | NbC | 4.23 | 0.166 | <25 | 350 | 0.935 | 97.2 | 98.9 |
| Comparative Example 1 | TaC | 1.31 | 0.330 | <25 | 150 | 0.776 | 38.5 | 67.7 |
| Comparative Example 2 | TaC | 1.44 | 0.330 | <25 | 120 | 0.579 | 79.5 | 85.0 |
| Comparative Example 3 | NbC | 1.53 | 0.458 | <25 | 180 | 0.618 | 17.4 | 33.8 |

As shown in Table 1, the metal carbide according to each of Examples 1 and 2 had a specific surface area as measured by a BET method of 1 $m^2/g$ or more and a circularity of 0.78 or more, and thus had high fluidity even though being in an ultrafine particle form.

The metal carbide according to each of Examples 1 and 2 had a **primary** particle diameter as measured by a BET method of 0.7 $\mu m$ or less and a circularity of 0.78 or more, and thus had high fluidity even though being in an ultrafine particle form.

The metal carbide according to each of Examples 1 and 2 has a chlorine content of 25 ppm or less in the metal carbide powder, and therefore does not contain hydrogen peroxide, and for example, when the metal carbide according to each of Examples 1 and 2 is applied onto the surface of a crucible to form a film, foaming does not occur, and uniform application is facilitated.

The metal carbide according to each of Examples 1 and 2 has a nitrogen content of 1,000 ppm or less in the metal carbide powder, and therefore does not contain an ammonia component, and is suitable in terms of safety and work.

As shown in Figs. 1 and 2, the metal carbide intermediate dispersion liquid according to each of Examples 3 to 10 was a dispersion liquid, which contains a metal compound, an alkaline compound, hydrogen peroxide, and an organic acid, and in which when the particle diameter (D50) of the particles in the metal carbide intermediate dispersion liquid as determined by particle diameter distribution measurement using a dynamic light scattering method is 1,000 nm or less, the dispersibility is high and a precipitate is not deposited even after a lapse of a long period of time. In addition, the metal carbide intermediate dispersion liquid according to each of Examples 3 to 10 contains a metal compound, an alkaline compound, hydrogen peroxide, and an organic acid, and the maximum value of light transmittance of the metal carbide intermediate dispersion liquid at a wavelength of 350 nm or more and 750 nm or less is 70% or more, and therefore the dispersibility was high, and the uniformity of components in the dispersion liquid was excellent.

The metal carbide intermediate dispersion liquid according to each of Examples 3 to 10 has a pH of 3.0 or more and 10.0 or less, and therefore polyacid ions contained in the dispersion liquid were stabilized.

The metal carbide intermediate dispersion liquid according to each of Examples 3 to 10 has a molar ratio of the organic acid to the metal compound: the organic acid/(Nb + Ta) shown in Fig. 1 of more than 0 to 500, a molar ratio of hydrogen peroxide to the metal compound: the hydrogen peroxide/(Nb + Ta) shown in Fig. 1 of more than 0 to 10, and a molar ratio of the alkaline compound to the metal compound: the ammonia/(Nb + Ta) shown of Fig. 1 is more than 0 to 100, and therefore had excellent stability and dispersibility.

The metal carbide intermediate dispersion liquid according to each of Examples 3 to 10 has a tantalum content in terms of Ta of 0.4 mass% or more, or a niobium content in terms of Nb of 0.35 mass% or more in the metal carbide intermediate dispersion liquid, and therefore is preferable from the viewpoint that the film thickness of the metal carbide film at the time of film formation is increased.

In addition, by firing the metal carbide intermediate dispersion liquid according to each of Examples 3 to 10, a metal carbide powder having high fluidity even though being in an ultrafine particle form was obtained.

Further, by applying the metal carbide intermediate dispersion liquid according to each of Examples 3 to 10 onto a base material, followed by firing, a metal carbide film was obtained.

The invention disclosed in the present description includes, in addition to the configurations of the respective inventions and embodiments, those specified by changing partial configurations thereof to other configurations disclosed in the present description, those specified by adding other configurations disclosed in the present description to the configurations thereof, or those specified by deleting partial configurations thereof to the extent that a partial operational effect can be obtained to create a higher concept.

**Industrial Applicability**

The metal carbide according to the present invention has high fluidity even though being in an ultrafine particle form, and thus is suitable as an additive for a raw material of a cemented carbide tool. Specifically, the metal carbide according to the present invention does not require an excessive mixing step with the raw material of a cemented carbide tool, and does not require heating for a long time during firing, and therefore the energy cost can be reduced. In addition, it is possible to reduce the occurrence rate of defective products that cannot be formed into homogeneous cemented carbide tools due to deterioration of the mixability with the raw material of the cemented carbide tool, and therefore the waste can be reduced and also the energy cost in the disposal of the waste can be reduced. These points lead to achievement of sustainable management and efficient advantages of natural resources, and decarbonization (carbon neutral).

**Claims**

1. A method for producing a metal carbide in a powder form, which is a method for producing a metal carbide in a powder form using a complex polymerization method, the method comprising:

    a complexation step of mixing a metal hydroxide and an alkaline compound to form a first mixed liquid, adding hydrogen peroxide to the first mixed liquid to form a second mixed liquid, and further adding an organic acid to the second mixed liquid to form a metal carbide precursor;
    a carbonization step of firing the metal carbide precursor to form a metal carbide; and
    a powdering step of crushing the metal carbide to form a metal carbide powder.

2. A method for producing a metal carbide in a film form, which is a method for producing a metal carbide in a film form using a complex polymerization method, the method comprising:

    a complexation step of mixing a metal hydroxide and an alkaline compound to form a first mixed liquid, adding hydrogen peroxide to the first mixed liquid to form a second mixed liquid, and further adding an organic acid to the second mixed liquid to form a metal carbide precursor;
    a dissolution step of dispersing the metal carbide precursor in pure water to form a metal carbide intermediate;

and
a carbonization step of applying the metal carbide intermediate onto a base material, followed by firing to form a metal carbide film containing a metal carbide on the base material.

3. The method for producing a metal carbide according to claim 1 or 2, comprising a drying step of drying the metal carbide precursor formed by the complexation step.

4. The method for producing a metal carbide according to claim 3, comprising a crushing step of crushing the metal carbide precursor dried in the drying step.

5. The method for producing a metal carbide according to claim 1 or 2, wherein the metal hydroxide is tantalum hydroxide or niobium hydroxide.

6. A method for producing a metal carbide precursor, which is a method for producing a metal carbide precursor for forming a metal carbide using a complex polymerization method, the method comprising:
a step of mixing a metal hydroxide and an alkaline compound to form a first mixed liquid, adding hydrogen peroxide to the first mixed liquid to form a second mixed liquid, and further adding an organic acid to the second mixed liquid to form the metal carbide precursor.

7. The method for producing a metal carbide precursor according to claim 6, comprising a drying step of drying the metal carbide precursor formed by the complexation step.

8. The method for producing a metal carbide precursor according to claim 6, wherein the metal hydroxide is tantalum hydroxide or niobium hydroxide.

9. A method for producing a metal carbide intermediate, which is a method for producing a metal carbide intermediate for forming a metal carbide using a complex polymerization method, the method comprising:

a complexation step of mixing a metal hydroxide and an alkaline compound to form a first mixed liquid, adding hydrogen peroxide to the first mixed liquid to form a second mixed liquid, and further adding an organic acid to the second mixed liquid to form a metal carbide precursor; and
a dissolution step of dispersing the metal carbide precursor in pure water to form a metal carbide intermediate.

10. The method for producing a metal carbide intermediate according to claim 9, comprising a drying step of drying the metal carbide precursor formed by the complexation step.

11. The method for producing a metal carbide intermediate according to claim 10, comprising a crushing step of crushing the metal carbide precursor dried in the drying step.

12. The method for producing a metal carbide intermediate according to claim 9, wherein the metal hydroxide is tantalum hydroxide or niobium hydroxide.

13. A metal carbide powder, wherein a specific surface area as measured by a BET method is 1 $m^2/g$ or more and a circularity is 0.78 or more.

14. A metal carbide powder, wherein a primary particle diameter as measured by a BET method is 0.7 $\mu m$ or less and a circularity is 0.78 or more.

15. The metal carbide powder according to claim 13 or 14, wherein the metal carbide powder contains niobium carbide or tantalum carbide.

16. The metal carbide powder according to claim 13 or 14, wherein a chlorine content in the metal carbide powder is 25 ppm or less.

17. The metal carbide powder according to claim 13 or 14, wherein a nitrogen content in the metal carbide powder is 1,000 ppm or less.

18. A cemented carbide tool, comprising the metal carbide powder according to claim 13 or 14.

19. A metal carbide intermediate dispersion liquid, comprising a metal compound, an alkaline compound, hydrogen peroxide, and an organic acid, wherein
a particle diameter (D50) of particles in the metal carbide intermediate dispersion liquid as determined by particle diameter distribution measurement using a dynamic light scattering method is 1,000 nm or less.

20. A metal carbide intermediate dispersion liquid, comprising a metal compound, an alkaline compound, hydrogen peroxide, and an organic acid, wherein
a maximum value of a light transmittance of the metal carbide intermediate dispersion liquid at a wavelength of 350 nm or more and 750 nm or less is 70% or more.

21. The metal carbide intermediate dispersion liquid according to claim 19 or 20, wherein the metal compound is a metal hydroxide.

22. The metal carbide intermediate dispersion liquid according to claim 19 or 20, wherein the organic acid is citric acid, tartaric acid, or lactic acid.

23. The metal carbide intermediate dispersion liquid according to claim 21, wherein the metal hydroxide is tantalum hydroxide and/or niobium hydroxide.

24. The metal carbide intermediate dispersion liquid according to claim 19 or 20, wherein a pH is 3.0 or more and 10.0 or less.

25. The metal carbide intermediate dispersion liquid according to claim 19 or 20, wherein a molar ratio of the organic acid to the metal compound is more than 0 to 500, a molar ratio of the hydrogen peroxide to the metal compound is more than 0 to 10, and a molar ratio of the alkaline compound to the metal compound is more than 0 to 100.

26. The metal carbide intermediate dispersion liquid according to claim 19 or 20, wherein a solvent of the metal carbide intermediate dispersion liquid is water.

27. The metal carbide intermediate dispersion liquid according to claim 19 or 20, wherein in the metal carbide intermediate dispersion liquid, a tantalum content in terms of Ta is 0.4 mass% or more, or a niobium content in terms of Nb is 0.35 mass% or more.

| | Metal type | Organic acid type | In terms of Nb | In terms of Ta | Total In terms of Nb and Ta | Content (mol) | | | | | |
|---|---|---|---|---|---|---|---|---|---|---|---|
| | | | | | | Hydrogen peroxide | Citric acid | Lactic acid | Tartaric acid | Total of organic acids | Ammonia |
| Example 3 | Ta | Citric acid | - | 0.050 | 0.050 | 0.009 | 0.07 | - | - | 0.070 | 0.2 |
| Example 4 | Nb | Citric acid | 0.020 | - | 0.020 | 0.009 | 0.07 | - | - | 0.070 | 0.2 |
| Example 5 | Ta | Citric acid, Lactic acid | - | 0.010 | 0.010 | 0.009 | 0.07 | 0.010 | - | 0.080 | 0.2 |
| Example 6 | Ta | Tartaric acid | - | 0.010 | 0.010 | 0.009 | - | - | 0.090 | 0.090 | 0.2 |
| Example 7 | Nb | Citric acid, Lactic acid | 0.015 | | 0.015 | 0.009 | 0.07 | 0.010 | - | 0.080 | 0.2 |
| Example 8 | Nb | Citric acid, Tartaric acid | 0.015 | - | 0.015 | 0.009 | 0.07 | - | 0.006 | 0.076 | 0.2 |
| Example 9 | Ta, Nb | Citric acid | 0.015 | 0.010 | 0.025 | 0.009 | 0.07 | - | - | 0.070 | 0.2 |
| Example 10 | Ta, Nb | Citric acid, Lactic acid, Tartaric acid | 0.015 | 0.010 | 0.025 | 0.009 | 0.07 | 0.010 | 0.006 | 0.086 | 0.2 |
| Comparative example 8 | Ta | Citric acid | - | 0.009 | 0.009 | 0.009 | 0.07 | - | - | 0.070 | - |
| Comparative example 9 | Ta | Lactic acid | - | 0.002 | 0.002 | 0.009 | - | 0.200 | - | 0.200 | - |
| Comparative example 10 | Ta | Tartaric acid | - | 0.001 | 0.001 | 0.009 | - | - | 0.100 | 0.100 | - |

| Molar ratio | | | | | | | | |
|---|---|---|---|---|---|---|---|---|
| Organic acid/Nb | Organic acid/Ta | Organic acid /(Nb+Ta) | Hydrogen proxide/Nb | Hydrogen proxide/Ta | Hydrogen proxide /(Nb+Ta) | Ammonia/ Nb | Ammonia/ Ta | Ammonia /(Nb+Ta) |
| - | 1.400 | 1.400 | - | 0.180 | 0.180 | - | 4.000 | 4.000 |
| 3.500 | - | 3.500 | 0.450 | - | 0.450 | 10.000 | - | 10.000 |
| - | 8.000 | 8.000 | - | 0.900 | 0.900 | - | 20.000 | 20.000 |
| - | 9.000 | 9.000 | - | 0.900 | 0.900 | - | 20.000 | 20.000 |
| 5.333 | - | 5.333 | 0.600 | - | 0.600 | 13.333 | - | 13.333 |
| 5.067 | - | 5.067 | 0.600 | - | 0.600 | 13.333 | - | 13.333 |
| 4.667 | 7.000 | 2.800 | 0.600 | 0.900 | 0.360 | 13.333 | 20.000 | 8.000 |
| 5.733 | 7.000 | 3.440 | 0.600 | 0.900 | 0.360 | 13.333 | 20.000 | 8.000 |
| - | 7.778 | 7.778 | - | 1.000 | 1.000 | - | - | - |
| - | 100.000 | 100.000 | - | 4.500 | 4.500 | - | - | - |
| - | 100.000 | 100.000 | - | 9.000 | 9.000 | - | - | - |

FIG. 1

30

| | Light transmittance (Wavelength 350 nm) | | | Light transmittance (Wavelength 450 nm) | | | Light transmittance (Wavelength 550 nm) | | |
|---|---|---|---|---|---|---|---|---|---|
| | Initial stage | After 2 weeks | After 3 weeks | Initial stage | After 2 weeks | After 3 weeks | Initial stage | After 2 weeks | After 3 weeks |
| Example 3 | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) |
| Example 4 | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) |
| Example 5 | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) |
| Example 6 | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) |
| Example 7 | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) |
| Example 8 | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) |
| Example 9 | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) |
| Example 10 | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) |
| Comparative example 8 | X(BAD) | X(BAD) | X(BAD) | X(BAD) | X(BAD) | X(BAD) | X(BAD) | X(BAD) | X(BAD) |
| Comparative example 9 | X(BAD) | X(BAD) | X(BAD) | X(BAD) | X(BAD) | X(BAD) | X(BAD) | X(BAD) | X(BAD) |
| Comparative example 10 | X(BAD) | X(BAD) | X(BAD) | X(BAD) | X(BAD) | X(BAD) | X(BAD) | X(BAD) | X(BAD) |

| | Light transmittance (Wavelength 650 nm) | | | Light transmittance (Wavelength 750 nm) | | | Particle diameter(D50) | | | pH | | |
|---|---|---|---|---|---|---|---|---|---|---|---|---|
| | Initial stage | After 2 weeks | After 3 weeks | Initial stage | After 2 weeks | After 3 weeks | Initial stage | After 2 weeks | After 3 weeks | Initial stage | After 2 weeks | After 3 weeks |
| | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | 5.2 | 5.5 | 5.5 |
| | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | 6.5 | 6.5 | 6.5 |
| | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | 5.0 | 5.0 | 5.2 |
| | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | 4.7 | 5.1 | 5.1 |
| | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | 5.2 | 5.5 | 5.5 |
| | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | 5.3 | 5.3 | 5.4 |
| | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | 5.0 | 5.3 | 5.4 |
| | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | OO(VERY GOOD) | 5.4 | 5.4 | 5.7 |
| | X(BAD) | X(BAD) | X(BAD) | X(BAD) | X(BAD) | X(BAD) | X(BAD) | X(BAD) | X(BAD) | - | - | - |
| | X(BAD) | X(BAD) | X(BAD) | X(BAD) | X(BAD) | X(BAD) | X(BAD) | X(BAD) | X(BAD) | - | - | - |
| | X(BAD) | X(BAD) | X(BAD) | X(BAD) | X(BAD) | X(BAD) | X(BAD) | X(BAD) | X(BAD) | - | - | - |

FIG. 2

## INTERNATIONAL SEARCH REPORT

| International application No. |
|---|
| **PCT/JP2023/035915** |

| A. | CLASSIFICATION OF SUBJECT MATTER |
|---|---|

*C01G 33/00*(2006.01)i; *C01G 35/00*(2006.01)i; *C01B 32/914*(2017.01)i
FI:  C01B32/914; C01G33/00 A; C01G35/00 D

According to International Patent Classification (IPC) or to both national classification and IPC

| B. | FIELDS SEARCHED |
|---|---|

Minimum documentation searched (classification system followed by classification symbols)

C01G33/00; C01G35/00; C01B32/914

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | LIN, S. S. et al. Laser ablation synthesis of tantalum carbide particles with specific phase assemblage and special interface. Applied Physics A Materials Science & Processing. 2015, vol. 120, no. 1, pp. 75-88<br>  fig. 2-3 | 13-17 |
| Y | | 18 |
| A | | 1-12, 19-27 |
| Y | JP 2015-127092 A (MITSUBISHI MATERIALS CORP) 09 July 2015 (2015-07-09)<br>  paragraph [0037] | 18 |
| A | | 1-17, 19-27 |
| A | MA, Minglian et al. Synthesis of TaC nanopowders by liquid precursor route. Materials Letters. 2011, vol. 65 no. 1, pp. 96-99<br>  abstract | 1-27 |
| A | CN 112397723 A (INSTITUTE OF SEMICONDUCTORS, GUANGDONG ACADEMY OF SCIENCES) 23 February 2021 (2021-02-23) | 1-27 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 November 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 600 217 A1**

**INTERNATIONAL SEARCH REPORT**

International application No.

**PCT/JP2023/035915**

### C. DOCUMENTS CONSIDERED TO BE RELEVANT

| Category* | Citation of document, with indication, where appropriate, of the relevant passages | Relevant to claim No. |
|---|---|---|
| A | CN 114538444 A (DALIAN CHEMICAL PHYSICAL INSTITUTE OF CHINESE ACADEMY OF SCIENCES) 27 May 2022 (2022-05-27) | 1-27 |
| A | JP 2008-31016 A (ALLIED MATERIAL CORP) 14 February 2008 (2008-02-14) | 1-27 |
| A | JP 2-167810 A (SEISAN KAIHATSU KAGAKU KENKYUSHO) 28 June 1990 (1990-06-28) | 1-27 |
| A | JP 2008-105936 A (NIPPON TUNGSTEN CO LTD) 08 May 2008 (2008-05-08) | 1-27 |
| A | CN 114715894 A (ZIGONG CEMENTED CARBIDE CO., LTD.) 08 July 2022 (2022-07-08) | 1-27 |
| A | JP 2006-182714 A (TOHOKU UNIV) 13 July 2006 (2006-07-13) | 1-27 |

Form PCT/ISA/210 (second sheet) (January 2015)

**INTERNATIONAL SEARCH REPORT**

International application No.

**PCT/JP2023/035915**

| Box No. III | Observations where unity of invention is lacking (Continuation of item 3 of first sheet) |

This International Searching Authority found multiple inventions in this international application, as follows:

Document 1: CN 114538444 A (DALIAN CHEMICAL PHYSICAL INSTITUTE OF CHINESE ACADEMY OF SCIENCES) 27 May 2022 (2022-05-27) (Family: none)
Claims are classified into the following four inventions.

Example 1 of document 1 discloses the production of a niobium carbide fine powder from a mixture of niobium oxalate, citric acid, and hydrogen peroxide.
(Invention 1) Claims 1-12 has the special technical feature of a method for producing a metal carbide in powder using a complex polymerization method, the method comprising: a complexing step for mixing a metal hydroxide and an alkaline compound to produce a first mixture, adding hydrogen peroxide to the first mixture to produce a second mixture, and adding an organic acid to the second mixture to produce a metal carbide precursor; and a carbonizing step for sintering the metal carbide precursor to produce a metal carbide, and are thus classified as invention 1.
In addition, claims 2-12 referring to claim 1 are classified as invention 1.

(Invention 2) Claim 13 shares the common technical feature of a metal carbide with claim 1 classified as invention 1. However, this technical feature does not make a contribution over the prior art in light of the disclosure of document 1, and thus cannot be said to be a special technical feature. In addition, there are no other identical or corresponding special technical features between these inventions. In addition, claim 13 is not dependent on claim 1. In addition, claim 13 is not substantially identical to or similarly closely related to any of the claims classified as invention 1. Therefore, claim 13 cannot be classified as invention 1. In addition, claim 13 has the special technical feature of a metal carbide powder having a specific surface area of at least 1 $m^2$/g according to the BET method, and having a roundness of at least 0.78, and is thus classified as invention 2.
Claim 14 has the special technical feature corresponding to claim 13, and is thus classified as invention 2.
In addition, claims 15-18 referring to any of claims 13-14 are classified as invention 2.

(Invention 3) Claim 19 shares the common technical feature of a metal carbide with claim 1 classified as invention 1 and claim 13 classified as invention 2. However, this technical feature does not make a contribution over the prior art in light of the disclosure of document 1, and thus cannot be said to be a special technical feature. In addition, there are no other identical or corresponding special technical features between these inventions. In addition, claim 19 is not dependent on claims 1 and 13. In addition, claim 19 is not substantially identical to or similarly closely related to any of the claims classified as invention 1 or 2. Thus, claim 19 cannot be classified as any of inventions 1 and 2. In addition, claim 19 has the special technical feature of a metal carbide intermediate dispersion liquid comprising a metal compound, an alkaline compound, hydrogen peroxide, and an organic acid, wherein the particle diameter (D50) of particles in the metal carbide intermediate dispersion liquid as measured by particle diameter distribution measurement using a dynamic light scattering method is 1,000 nm or less, and is thus classified as invention 3.
In addition, claims 21-27 referring to claim 19 are classified as invention 3.

(Invention 4) Claim 20 shares the common technical feature of a metal carbide with claim 1 classified as invention 1, claim 13 classified as invention 2, and claim 19 classified as invention 3. However, this technical feature does not make a contribution over the prior art in light of the disclosure of document 1, and thus cannot be said to be a special technical feature. In addition, there are no other identical or corresponding special technical features between these inventions. In addition, claim 20 is not dependent on claims 1, 13, and 19. In addition, claim 20 is not substantially identical or equivalent to any of the claims classified as inventions 1, 2, and 3. Thus, claim 20 cannot be classified as any of inventions 1, 2, and 3. In addition, claim 20 has the special technical feature of a metal carbide intermediate dispersion liquid comprising a metal compound, an alkaline compound, hydrogen peroxide, and an organic acid, wherein the maximum value of light transmittance at wavelengths of 350 nm to 750 nm of the metal carbide intermediate dispersion liquid is at least 70%, and is thus classified as invention 4.
In addition, claims 21-27 referring to claim 20 are classified as invention 4.

| INTERNATIONAL SEARCH REPORT | International application No. |
|---|---|
| | **PCT/JP2023/035915** |

**Box No. III      Observations where unity of invention is lacking (Continuation of item 3 of first sheet)**

1. ☐  As all required additional search fees were timely paid by the applicant, this international search report covers all searchable claims.

2. ☑  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**     ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (January 2015)

## INTERNATIONAL SEARCH REPORT
### Information on patent family members

International application No.

**PCT/JP2023/035915**

| Patent document cited in search report | | | Publication date (day/month/year) | Patent family member(s) | | | Publication date (day/month/year) |
|---|---|---|---|---|---|---|---|
| JP | 2015-127092 | A | 09 July 2015 | US 2016/0375497 A1 paragraph [0071] CN 105764637 A | | | |
| CN | 112397723 | A | 23 February 2021 | (Family: none) | | | |
| CN | 114538444 | A | 27 May 2022 | (Family: none) | | | |
| JP | 2008-31016 | A | 14 February 2008 | (Family: none) | | | |
| JP | 2-167810 | A | 28 June 1990 | US 05552073 A | | | |
| JP | 2008-105936 | A | 08 May 2008 | (Family: none) | | | |
| CN | 114715894 | A | 08 July 2022 | (Family: none) | | | |
| JP | 2006-182714 | A | 13 July 2006 | (Family: none) | | | |

Form PCT/ISA/210 (patent family annex) (January 2015)

**REFERENCES CITED IN THE DESCRIPTION**

**Patent documents cited in the description**

• JP 2008031016 A